# EUROPÄISCHE PATENTSCHRIFT

(11) **EP 3 897 169 B1**
(45) Veröffentlichungstag und Bekanntmachung des Hinweises auf die Patenterteilung: **08.06.2022**
(21) Anmeldenummer: 19717300.8
(22) Anmeldetag: 09.04.2019
(51) Int. Cl.: B26D 1/24, B26D 3/06, B26D 5/00, B26D 5/08, B26D 7/06, B26D 7/26, A22C 25/16, B25J 9/00, B25J 9/10, B25J 11/00, A22C 17/00

(54) **ANORDNUNG UND VERFAHREN ZUM AUTOMATISCHEN ENTFERNEN EINES AUS ROTFLEISCH, DEM SO GENANNTEN "DARK MEAT", BESTEHENDEN STREIFENS AUS EINEM FISCHFILET**
ARRANGEMENT AND METHOD FOR AUTOMATICALLY REMOVING A STRIP CONSISTING OF DARK MEAT FROM A FISH FILLET
ENSEMBLE ET PROCÉDÉ D'ÉLIMINATION AUTOMATIQUE D'UNE BANDE CONSTITUÉE DE CE QUE L'ON APPELLE "CHAIR GRISE" SUR UN FILET DE POISSON

(43) Veröffentlichungstag der Anmeldung: 27.10.2021
(73) Patentinhaber: Nordischer Maschinenbau Rud. Baader GmbH + Co. KG, 23560 Lübeck (DE)
(72) Erfinder: RUSKO, Torsten, 23923 Herrnburg (DE)
(74) Vertreter: Stork Bamberger Patentanwälte PartmbB
(86) Internationale Anmeldenummer: PCT/EP2019/058973
(87) Internationale Veröffentlichungsnummer: WO 2020/207569

(56) Entgegenhaltungen:
- EP-A1- 2 755 018
- US-A- 2 565 727
- US-A- 3 800 363
- US-A- 3 840 939

## Beschreibung

### Beschreibung

Die Erfindung betrifft eine Anordnung, ausgebildet und eingerichtet zum automatischen Entfernen eines aus Rotfleisch, dem so genannten "dark meat", bestehenden Streifens aus einem Fischfilet.

Die Erfindung betrifft auch ein Verfahren zum automatischen Entfernen eines aus Rotfleisch, dem so genannten "dark meat", bestehenden Streifens aus einem Fischfilet.

Bei der Verarbeitung von Thunfisch und vergleichbaren Spezies, die Langdistanz-Wanderungen durchführen und entsprechend eine besondere Muskelstruktur aufweisen, ist entsprechend auf die besonderen Gegebenheiten der Muskelstruktur Rücksicht zu nehmen. Am Beispiel des Thunfisches weisen die vom Grätengerüst und insbesondere von der Hauptgräte/Mittelgräte gelösten Fischfilets eine inhomogene Muskelstruktur auf. Das bedeutet, dass unterschiedliche Fleisch- bzw. Muskelanteile existieren. Neben dem "normalen" Muskelfleisch, das üblicherweise hell ist, weisen die Fischfilets ausgehend von dem Bereich der (entfernten) Mittelgräte in Richtung der Hautseite einen Bereich aus dunklem Muskelfleisch auf. Das dunkle Muskelfleisch, das so genannte Rotfleisch, ist geschmacklich von minderer Qualität, so dass es möglichst vollständig zu entfernen ist.

Der Bereich der Mittelgräte teilt das Fischfilet imaginär in ein rückenseitiges Teilfilet und ein bauchseitiges Teilfilet. Anders ausgedrückt wird der Bereich des Fischfilets, der sich ausgehend von der Mittelgräte nach oben - in Richtung der Rückenflossen - erstreckt, als rückenseitiges Teilfilet bezeichnet, während der Bereich des Fischfilets, der sich ausgehend von der Mittelgräte nach unten - in Richtung der Bauchhöhle - erstreckt, als bauchseitiges Teilfilet bezeichnet. Mit dem Begriff Fischfilet sind nicht nur solche Produkte bezeichnet, die überhaupt keine Gräten mehr haben, sondern insbesondere auch solche Produkte, bei denen zumindest die Mittelgräte entfernt ist, so dass der Streifen aus Rotfleisch auf der der Hautseite abgewandten Seite freiliegend ist. Die Verarbeitung der Fischfilets erfolgt entsprechend mit der Hautseite nach unten.

Die Ausbreitung des Rotfleisches, das auch als "dark meat" bezeichnet wird, innerhalb des Fischfilets erlaubt es allerdings nicht, das Entfernen mit gängigen Schneidvorrichtungen, bei denen z.B. zwei V-förmig zueinander angestellte Kreismesser einen V-förmigen Streifen aus dem Fischfilet schneiden, auszuführen. Die Ausbreitung des Rotfleisches weicht nämlich von einer klassischen V-Form ab und variiert von Fischfilet zu Fischfilet. Entsprechend führt ein einfacher V-Schnitt entweder dazu, dass noch Rotfleisch im Fischfilet verbleibt, oder es wird neben dem Rotfleisch auch noch helles Muskelfleisch entfernt. Anders ausgedrückt werden die Bearbeitungsergebnisse beim Entfernen des Rotfleisches mit gängigen Schneidvorrichtungen wegen der Ausbeuteverluste einerseits und der Fehlerraten andererseits nicht akzeptiert, so dass die Verarbeitung des Thunfisches oder vergleichbarer Spezies beim Entfernen des Rotfleisches bisher manuell erfolgt.

Um den Personen das manuelle Entfernen des Rotfleisches zu erleichtern, werden die zu verarbeitenden Produkte vor der Verarbeitung gekocht. Das Kochen bewirkt eine Farbveränderung dahingehend, dass das "normale" Muskelfleisch (noch) hell(er) wird, während das dunkle Rotfleisch noch dunkler (fast schwarz) wird. Die Farbveränderung ermöglicht es der Person, die Strukturen und Fleischanteile besser zu unterscheiden, und insbesondere die Ausbreitung des Rotfleisches innerhalb des Produktes besser zu erkennen. Das manuelle Entfernen des Rotfleisches aus dem Fischfilet weist jedoch diverse Nachteile auf. Zum einen ist das manuelle Entfernen sehr zeitaufwendig und damit kostenintensiv, zumal mit dem Kochen ein zusätzlicher und zeitintensiver Arbeitsschritt notwendig ist. Zum anderen führt das manuelle Entfernen zu Ausbeuteverlusten. Weiterhin ist das Schneidergebnis wesentlich von der Erfahrung und Kompetenz der Person abhängig, die das Produkt verarbeitet.

Eine Anordnung ausgebildet und eingerichtet zum automatischen Entfernen eines aus Rotfleisch, dem so genannten "dark meat", bestehenden Streifens aus einem Fischfilet ist aus der EP 2 755 018 A1 bekannt.

Der Erfindung liegt somit die Aufgabe zugrunde, eine Anordnung zu schaffen, die das automatische Entfernen des Streifens aus Rotfleisch aus Fischfilets zuverlässig und ausbeuteoptimiert gewährleistet. Der Erfindung liegt weiterhin die Aufgabe zugrunde, ein entsprechendes Verfahren zu schaffen.

Diese Aufgabe wird durch eine Anordnung der eingangs genannten Art dadurch gelöst, dass sie gekennzeichnet ist durch eine Fördereinheit zum Transportieren des zu verarbeitenden Fischfilets von einem Eingabebereich des Fischfilets in die Anordnung zu einem Ausgabebereich des Fischfilets aus der Anordnung in Transportrichtung T entlang eines Transportpfads, sowie ausgehend vom Eingabebereich in Richtung des Ausgabebereiches nacheinander entlang des Transportpfads ein erstes Mittel zum Erkennen des Rotfleisches in dem zu verarbeitenden Fischfilet, eine erste Schneidvorrichtung zum Entfernen eines mittleren, zentralen Teilstreifens des Rotfleisches aus dem Fischfilet, ein Mittel zum Aufklappen des vom mittleren Teilstreifen befreiten Fischfilets derart, dass die durch die erste Schneidvorrichtung entstehenden Schnittflächen eines bauchseitigen und noch am Fischfilet befindlichen Teilstreifens des Rotfleisches und eines rückenseitigen und noch am Fischfilet befindlichen Teilstreifens des Rotfleisches von der Fördereinheit weg nach oben weisend ausgerichtet sind, eine Schneideinheit zum Entfernen des bauchseitigen und des rückenseitigen Teilstreifens des Rotfleisches aus dem Fischfilet, wobei die Schneideinheit eine zweite Schneidvorrichtung zum Entfernen des bauchseitigen Teilstreifens und eine dritte Schneidvorrichtung zum Entfernen des rückenseitigen Teilstreifens aufweist, sowie eine Steuerungseinrichtung, wobei mindestens das Mittel zum Erkennen des Rotfleisches sowie die drei Schneidvorrichtungen mit der Steuerungseinrichtung verbunden sind, derart, dass sämtliche Schnitte auf der Basis der vom Mittel zur Erkennung des Rotfleisches ermittelten Daten und/oder Informationen ausführbar sind. Durch die erfindungsgemäße Anordnung kann Rotfleisch enthaltendes Fischfilet, insbesondere Thunfischfilet. maschinell präzise und ausbeuteffizient vom Rotfleisch befreit werden. Durch die drei in Transportrichtung T hintereinander angeordneten Schneidvorrichtungen kann der zu entfernende Streifen aus Rotfleisch schrittweise aus dem Fischfilet geschnitten werden, indem ein erster Schnitt in die Tiefe in Richtung Hautseite des flach mit der Hautseite auf der Fördereinheit liegenden Fischfilets geht und der zweite und dritte Schnitt überwiegend in den Bauchbereich bzw. in den Rückenbereich geht, da durch das Mittel zum Aufklappen oder Auffalten des Fischfilets die Teilfilets, also der bauchseitige Abschnitt und der rückenseitige Abschnitt des Fischfilets, in eine Position gebracht werden, die es der zweiten und dritten Schneidvorrichtung erlaubt, quasi parallel zur Hautseite in die Fischfilets einzudringen. Damit lassen sich für jedes Fischfilet individuell die Streifen aus Rotfleisch entfernen, und zwar unabhängig von der jeweiligen Ausbreitung des Rotfleisches innerhalb des Fischfilets. Im Übrigen kann damit insbesondere auch roher, also nicht gekochter Fisch, verarbeitet werden.

In einer bevorzugten Weiterbildung der Erfindung ist in Transportrichtung T zwischen dem Mittel zum Aufklappen des Fischfilets und der Schneideinheit ein zweites Mittel zum Erkennen des verbliebenen Rotfleisches in dem zu verarbeitenden Fischfilet angeordnet, wobei das zweite Mittel zum Erkennen des Rotfleisches ebenfalls mit der Steuerungseinrichtung verbunden ist. Dadurch können die zweite und dritte Schneidvorrichtung noch präziser hinsichtlich ihrer Schnittführung gesteuert werden. Nach dem ersten Schnitt und dem Entfernen eines ersten Teilstreifens des Rotfleisches wird mit dem zweiten Mittel zum Erkennen des verbliebenen Rotfleisches die exakte Ausbreitung des verbliebenen Rotfleisches im Bauchbereich und im Rückenbereich erkannt, so dass das vollständige und ausbeuteoptimierte Entfernen des Rotfleisches verbessert wird.

Vorteilhafterweise ist in Transportrichtung T zwischen dem im Eingabebereich angeordneten ersten Mittel zum Erkennen des Rotfleisches und der ersten Schneidvorrichtung zum Entfernen des mittleren, zentralen Teilstreifens eine Handhabungseinrichtung zum automatischen Ausrichten des zu verarbeitenden Fischfilets auf der Fördereinheit angeordnet, wobei die Handhabungseinrichtung ebenfalls mit der Steuerungseinrichtung verbunden ist. Durch die Handhabungseinrichtung kann jedes zu verarbeitende Fischfilet hinsichtlich der Ausrichtung des Streifens aus Rotfleisch optimal in Bezug auf die erste Schneidvorrichtung ausgerichtet werden, um das Schnittergebnis der ersten Schneidvorrichtung zu optimieren.

Eine bevorzugte Ausführungsform ist dadurch gekennzeichnet, dass die Handhabungseinrichtung eine Robotermechanik, z.B. eine Deltakinematik, mit einem Ausrichtwerkzeug umfasst. Mit dieser Ausführungsform lassen sich die Fischfilets nahezu frei in allen Richtungen bewegen und insbesondere auch drehen, wodurch eine individuelle und präzise Positionierung des Fischfilets mit einem mittig auf der Fördereinheit liegenden und im Wesentlichen parallel zur Transportrichtung T ausgerichteten Streifen aus Rotfleisch vor dem ersten Schnitt gewährleistet ist, unabhängig von der Ausgangslage/Ausgangsposition des jeweiligen Fischfilets auf der Fördereinheit.

Vorzugsweise umfasst die erste Schneidvorrichtung zwei V-förmig in einem festen Winkel zueinander angestellte Kreismesser sowie Antriebsmittel für die Kreismesser, wobei die beiden Kreismesser vertikal und horizontal verstellbar ausgebildet sind. Damit ist eine einfache und dennoch präzise und effiziente Entfernung des mittleren, zentralen Teilstreifens des Rotfleisches sichergestellt.

Besonders bevorzugt ist die erste Schneidvorrichtung an einer Robotermechanik, z.B. einer Deltakinematik, angeordnet, mittels der die Position der ersten Schneidvorrichtung relativ zur Fördereinheit mindestens in vertikaler und horizontaler Richtung verstellbar ist, wobei die Robotermechanik ebenfalls mit der Steuerungseinrichtung verbunden ist. Insbesondere in Kombination mit der Handhabungseinrichtung ist dadurch eine optimale Ausrichtung der Fischfilets zu den Kreismessern und der Kreismesser zu den Fischfilets für eine präzise Schnittführung gewährleistet.

Zweckmäßigerweise umfassen die zweite und die dritte Schneidvorrichtung jeweils zwei V-förmig zueinander angestellte Kreismesser sowie Antriebsmittel für die Kreismesser. Mit dieser Ausführung können die bauchseitigen und die rückenseitigen Teilstreifen des Rotfleisches besonders effizient und präzise entfernt werden.

Eine besonders vorteilhafte Ausgestaltung ist dadurch gekennzeichnet, dass die zweite und die dritte Schneidvorrichtung jeweils einen Messerträger aufweisen, dem zwei Messereinheiten zugeordnet sind, wobei jede Messereinheit ein Kreismesser und ein Antriebsmittel zum rotierenden Antreiben des Kreismessers um eine Drehmittelachse M₁, M₂ umfasst, wobei die beiden Kreismesser in einer einen Winkel α einschließenden Position im Wesentlichen V-förmig zueinander angestellt sind und die Größe des Winkels α durch eine verstellbare Anordnung der Messereinheiten am Messerträger einstellbar ist, wobei der Versatz der beiden Drehmittelachsen M₁, M₂ voneinander in Transportrichtung T gleich Null ist und die beiden Messereinheiten ausschließlich synchron zueinander verstellbar ausgebildet und eingerichtet sind. Damit kann jede Schneidvorrichtung für ein ausbeuteeffizientes und Fehlschnitte vermeidendes Entfernen der Teilstreifen an die individuelle Ausbreitung des Rotfleisches im bauchseitigen und rückenseitigen Abschnitt eingestellt und angepasst werden.

Vorzugsweise sind die zweite und die dritte Schneidvorrichtung in Transportrichtung T hintereinander angeordnet und jeweils an einer Robotermechanik, z.B. einer Deltakinematik, angeordnet, wobei die Robotermechaniken ebenfalls mit der Steuerungseinrichtung verbunden sind. Mit der Robotermechanik lassen sich die Schneidvorrichtungen vor und während des Schnittes für eine verbesserte Schnittführung optimal zu den zu verarbeitenden Fischfilets positionieren.

Eine besonders bevorzugte Weiterbildung ist dadurch gekennzeichnet, dass die Fördereinheit mehrere Förderelemente umfasst, wobei ein erstes Förderelement im Bereich der ersten Schneidvorrichtung ein umlaufend angetriebenes Doppelband mit einem mittig und parallel zur Transportrichtung T verlaufenden Spalt ist, während ein zweites Förderelement im Bereich der Schneideinheit eine im Querschnitt dreieckförmige, umlaufend angetriebene Segmentkette ist. Mit dieser Ausbildung der Fördereinheit ist die Fördereinheit an die jeweiligen Schneidvorrichtungen angepasst, derart, dass die Fischfilets jeweils in einer optimalen Lage/Position zur Schneidvorrichtung platziert sind.

Vorteilhafterweise bilden das Doppelband und die Segmentkette in Transportrichtung T eine durchgängige Fördereinheit entlang des Transportpfads, wobei die Segmentkette zur Übernahme der Fischfilets vom Doppelband mindestens im Übergangsbereich vom Doppelband zur Segmentkette von unten durch den Spalt in das Doppelband greift. In dem Übergangsbereich hat das Fischfilet somit Kontakt zum Doppelband einerseits und zur Segmentkette andererseits. Damit ist eine kontinuierliche Förderung der Fischfilets durch die gesamte Anordnung sichergestellt.

Besonders bevorzugt bildet die Segmentkette das Mittel zum Aufklappen der Fischfilets. Dadurch kann auf zusätzliche Mittel zum Aufklappen oder Auffalten verzichtet werden. Durch die Doppelfunktion der Segmentkette als Fördermittel und Mittel zum Aufklappen ist eine einfache und dennoch zuverlässige Positionierung der Fischfilets unterhalb der zweiten und dritten Schneidvorrichtung gewährleistet. Die im Querschnitt mindestens teilweise dreiecksförmige Segmentkette führt dazu, dass die Teilfilets beim Verlassen des Doppelbandes alleine durch Schwerkraft so weit zur Seite und nach unten klappen, dass die durch den ersten Schnitt gebildeten Schnittflächen noch oben bzw. zumindest nach schräg oben weisen, so dass die zweite und die dritte Schneidvorrichtung in den Bauchbereich bzw. in den Rückenbereich - im Wesentlichen parallel zur Hautseite -, also in einen Bereich, in den die erste Schneidvorrichtung nicht bzw. nicht ohne Ausbeuterverlust eindringen kann, eindringen können.

Vorteilhafterweise weist die Segmentkette auf ihrer in Richtung der Schneideinheit weisenden Oberseite dornartige Vorsprünge zum Fixieren der Fischfilets auf der Segmentkette auf. Dadurch ist eine zusätzliche Fixierung der Fischfilets auf der Segmentkette gewährleistet, wodurch die Fischfilets gegen ein Verrutschen auf der Segmentkette gesichert und positionsgenau transportierbar sind. Ein weiterer Effekt der dornartigen Vorsprünge besteht darin, dass das Abknicken der Teilfilets zu beiden Seiten der im Querschnitt dreieckförmigen oder genauer dachförmigen Segmentkette, also das Aufklappen des Fischfilets, unterstützt wird.

In einer bevorzugten Weiterbildung sind der Segmentkette mindestens im Bereich der Schneideinheit Niederhalter zugeordnet, derart, dass die aufgeklappten Fischfilets zu beiden Seiten der Segmentkette zwischen Niederhalter und Segmentkette mindestens beim Entfernen der bauchseitigen und rückenseitigen Teilstreifen fixierbar sind. Durch den Transport der Fischfilets in Transportrichtung T fädeln die Fischfilets bzw. die zu beiden Seiten von der Segmentkette herabhängenden Teilfilets zwischen der Segmentkette, die von unten stützt, und dem Niederhalter, der von oben hält, ein, wodurch die Teilfilets beim Schneiden sicher und präzise gehalten werden. Die Niederhalter bilden somit letztlich zusammen mit der Segmentkette das Mittel zum Aufklappen bzw. unterstützen die Segmentkette zumindest beim Vorgang des Aufklappens, da sie die Teilfilets zuverlässig in der aufgespreizten Stellung halten.

Vorzugsweise sind auch im Bereich des Doppelbandes Fixiermittel vorgesehen, derart, dass das Fischfilet mindestens beim Entfernen des mittleren, zentralen Teilstreifens auf dem Doppelband fixierbar ist. Mit anderen Worten wird das mit der Hautseite flach auf dem Doppelband liegende Fischfilet wahlweise von oben gegen das Doppelband gedrückt und/oder von unten an das Doppelband gesaugt.

In einer besonders bevorzugten Weiterbildung ist in Transportrichtung T hinter der ersten die zweite und dritte Schneidvorrichtung umfassenden Schneideinheit eine zweite Schneideinheit angeordnet, die der ersten Schneideinheit einspricht, wobei die zweite Schneideinheit ebenfalls mit der Steuerungseinrichtung verbunden ist. Anders ausgedrückt wird die Schneideinheit gedoppelt, so dass nacheinander jeweils zwei Schnitte zum Entfernen des bauchseitigen Teilstreifens und jeweils zwei Schnitte zum Entfernen des rückenseitigen Teilstreifens ausführbar sind. Dadurch lässt sich zum einen die Verarbeitungsgeschwindigkeit erhöhen. Zum anderen wird die Genauigkeit bei der Entfernung des Streifens des Rotfleisches aus einem Fischfilet verbessert.

Zweckmäßigerweise ist in Transportrichtung T hinter der ersten Schneideinheit und vor der zweiten Schneideinheit ein drittes Mittel zum Erkennen von Rotfleisch angeordnet, wobei das dritte Mittel zum Erkennen von Rotfleisch ebenfalls mit der Steuerungseinrichtung verbunden ist. Auch diese Ausführung verbessert die Schnittgenauigkeit und damit das Verarbeitungsergebnis.

Eine bevorzugte Ausführungsform ist dadurch gekennzeichnet, dass im Bereich jeder Schneidvorrichtung Mittel zum Absaugen der entfernten Teilstreifen angeordnet sind. Durch diese Weiterbildung ist der Schneidbereich stets von bereits entfernten Teilstreifen oder Teilen davon befreit, wodurch insbesondere die Erkennung des (Rest-)Rotfleisches durch nachgeordnete Mittel zum Erkennen des Rotfleisches verbessert wird.

Die Aufgabe wird auch durch ein Verfahren gelöst, das gekennzeichnet ist durch folgende Schritte: automatisches Transportieren des zu bearbeitenden Fischfilets entlang eines Transportpfads von einem Eingabebereich zu einem Ausgabebereich in Transportrichtung T mittels einer Fördereinheit, automatisches Erkennen des Rotfleisches in dem zu verarbeitenden Fischfilet mittels eines Mittels zur Erkennung des Rotfleisches, automatisches Schneiden eines mittleren, zentralen Teilstreifens des Rotfleisches aus dem Fischfilet mittels einer ersten Schneidvorrichtung, automatisches Aufklappen des vom mittleren Teilstreifen befreiten Fischfilets mittels eines Mittels zum Aufklappen, derart, dass die beim Entfernen des mittleren, zentralen Teilstreifens gebildeten Schnittflächen eines bauchseitigen und noch am Fischfilet befindlichen Teilstreifens des Rotfleisches und eines rückenseitigen und noch am Fischfilet befindlichen Teilstreifens des Rotfleisches von der Fördereinheit weg nach oben weisend ausgerichtet sind, automatisches Schneiden des bauchseitigen und rückenseitigen Teilstreifens aus dem Fischfilet mittels einer zweiten und einer dritten Schneidvorrichtung, wobei die Schneidvorrichtungen mittels einer Steuerungseinrichtung auf der Basis der vom Mittel zur Erkennung des Rotfleisches ermittelten Daten und/oder Informationen gesteuert werden.

Vorzugsweise wird der Streifen des Rotfleisches in mindestens drei Schritten automatisch aus dem Fischfilet geschnitten, wobei zuerst der mittlere, zentrale Teilstreifen aus dem Fischfilet und anschließend zunächst der bauchseitige Teilstreifen und dann der rückenseitige Teilstreifen oder erst der rückenseitige Teilstreifen und dann der bauchseitige Teilstreifen des Rotfleisches aus dem Fischfilet geschnitten werden. Die Reihenfolge der Ausführung der Schnitte zum Entfernen des bauchseitigen Teilstreifens und zum Entfernen des rückenseitigen Teilstreifens ist beliebig.

Vorteilhafterweise wird das Schneiden zunächst der bauchseitige Teilstreifen und dann der rückenseitige Teilstreifen oder umgekehrt in einem vierten und fünften Schritt durch zusätzliche Schneidvorrichtungen entlang des Transportpfads wiederholt, wobei vor dem vierten und fünften Schritt ein erneutes automatisches Erkennen des Rotfleisches in dem zu verarbeitenden Fischfilet mittels eines Mittels zur Erkennung des Rotfleisches erfolgt. Mit anderen Worten werden der zweite und der dritte Schnitt jeweils mindestens einmal, ggf. auch zweimal oder mehrmals wiederholt, um durch die Wiederholung mit jeweils erneuter und damit präzisierter Erkennung des noch im Fischfilet befindlichen Rotfleisches die Genauigkeit zu verbessern.

Vorzugsweise wird jedes Fischfilet während des Schneidens der Teilstreifen auf der Fördereinheit fixiert.

Besonders bevorzugt werden sämtliche Schnitte aller Teilstreifen durch V-förmig zueinander angestellte Kreismesser ausgeführt.

Optional werden die durch das Schneiden entfernten Teilstreifen abgesaugt.

Besonders bevorzugt wird das Verfahren mit einer Anordnung nach einem oder mehreren der Ansprüche 1 bis 18 ausgeführt.

Weitere sich daraus ergebende Vorteile wurden bereits im Zusammenhang mit der Anordnung beschrieben, weshalb zur Vermeidung von Wiederholungen auf die entsprechenden Passagen verwiesen wird.

Weitere zweckmäßige und/oder vorteilhafte Merkmale und Weiterbildungen zur Anordnung und zum Verfahren ergeben sich aus den Unteransprüchen und der Beschreibung. Besonders bevorzugte Ausführungsformen der Anordnung sowie das Verfahren werden anhand der beigefügten Zeichnung näher erläutert. In der Zeichnung zeigt:
- Fig. 1: einen axialen Querschnitt durch ein Fischfilet mit einer Mittelgräte und der der Mittelgräte gegenüberliegenden Hautseite,
- Fig. 2: das Fischfilet gemäß Figur 1 ohne die Mittelgräte, mit der Hautseite auf einer Fördereinheit liegend,
- Fig. 3: eine schematische Darstellung einer bevorzugten Ausführungsform einer Anordnung zum automatischen Entfernen eines aus Rotfleisch bestehenden Streifens aus einem Fischfilet gemäß Figur 2,
- Fig. 4: eine vergrößerte Darstellung eines Doppelbandes als Bestandteil einer Fördereinheit mit oberhalb des Doppelbandes angeordnetem, erstem Mittel zum Erkennen des Rotfleisches, einer ersten Schneidvorrichtung zum Entfernen eines mittleren, zentralen Teilstreifens des Rotfleisches sowie einer Handhabungseinrichtung zum automatischen Ausrichten des Fischfilets auf dem Doppelband,
- Fig. 5: eine Schnittansicht durch eine Segmentkette als Bestandteil einer Fördereinheit mit einem vom mittleren, zentralen Teilstreifen des Rotfleisches befreiten Fischfilet in aufgeklappter Position auf der Segmentkette,

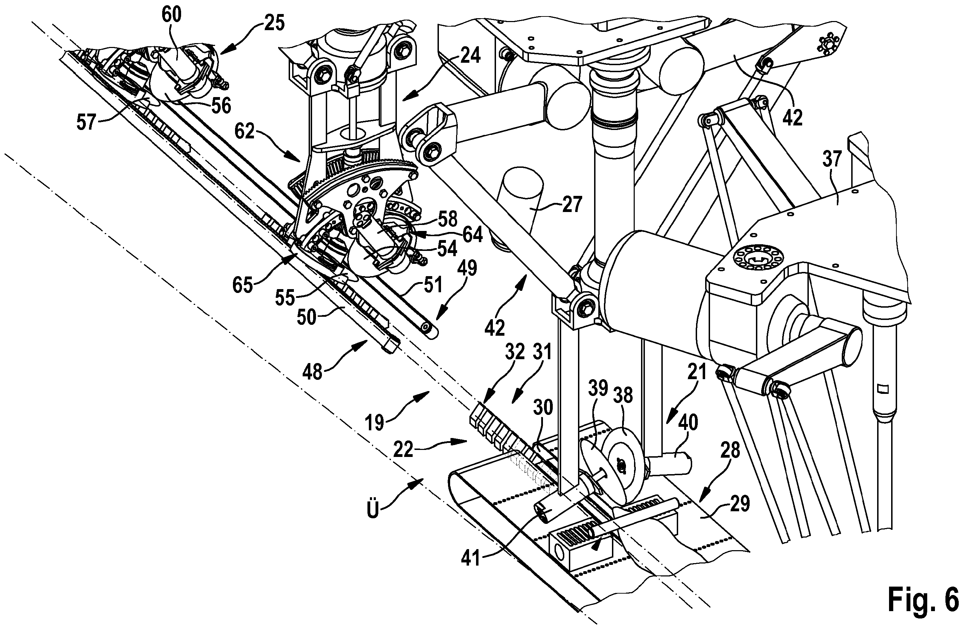

- Fig. 6: eine vergrößerte Darstellung des Übergangsbereichs vom Doppelband zur Segmentkette mit einem zweiten Mittel zum Erkennen des Rotfleisches und einer zweiten Schneidvorrichtung als Bestandteil einer Schneideinheit zum Entfernen eines bauchseitig oder rückenseitig am Fischfilet befindlichen Teilstreifens des Rotfleisches,

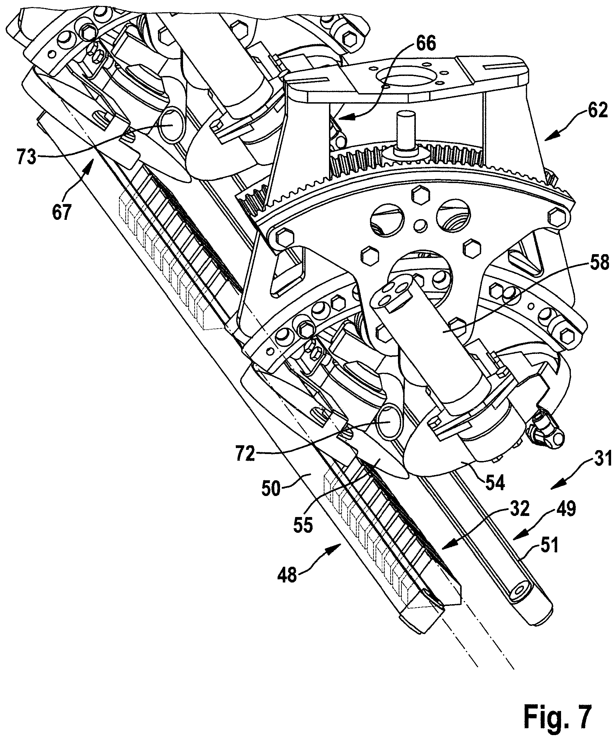

- Fig. 7: eine vergrößerte Darstellung der zweiten und einer dritten Schneidvorrichtung oberhalb der Segmentkette und Niederhaltern in perspektivischer Ansicht, und
- Fig. 8: die Darstellung gemäß Figur 7 in Transportrichtung T gesehen.

Die in der Zeichnung dargestellte Anordnung dient zum automatischen Entfernen eines Streifens Rotfleisch aus einem Fischfilet. Die Erfindung wird am Beispiel des Thunfisches beschrieben, der das zu entfernende "dark meat" aufweist. Die Erfindung ist jedoch in gleicher Weise auf andere Fischarten anwendbar, die in ihrem Fischfilet neben dem "normalen" Muskelfleisch einen Streifen des Rotfleisches ("dark meat") aufweisen. Dabei handelt es sich insbesondere um solche Fischarten, die aufgrund ihrer Eigenart, Langdistanzen zu überwinden, diese spezielle Muskelstruktur aufweisen.

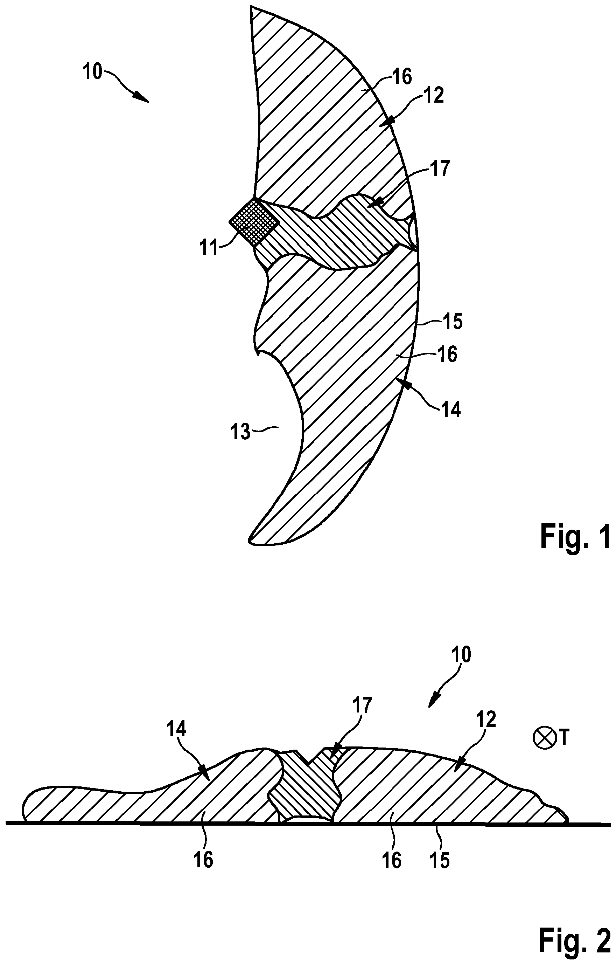

Zum besseren Verständnis wird anhand der Figuren 1 und 2 zunächst die Muskelstruktur eines Thunfisches bzw. eines Fischfilets 10 sowie vergleichbarer Spezies erläutert. In der Figur 1 ist ein einzelnes Fischfilet 10 eines zwei Filets aufweisenden Thunfisches gezeigt. Das einzelne Fischfilet 10 umfasst in der Darstellung noch eine Mittelgräte 11. Ausgehend von der Mittelgräte 11 nach oben in Richtung einer nicht dargestellten Rückenflosse erstreckt sich das rückenseitige Teilfilet 12. Ausgehend von der Mittelgräte 11 nach unten in Richtung einer (nur angedeuteten) Bauchhöhle 13 erstreckt sich das bauchseitige Teilfilet 14. Auf der der Mittelgräte 11 entgegengesetzten Seite befindet sich die Hautseite 15 des Fischfilets 10. Das Fischfilet 10 besteht überwiegend aus "normalem", hellem Muskelfleisch 16. Ausgehend von der Mittelgräte 11 in Richtung der Hautseite 15 erstreckt sich jedoch ein teilweise asymmetrischer Streifen 17 Rotfleisch. Dieser Streifen 17 weist für jedes Fischfilet 10 eine individuelle Ausbreitung innerhalb des Muskelfleisches 16 auf.

In der Figur 2 ist das Fischfilet 10 gemäß Figur 1 ohne die Mittelgräte 11 dargestellt, wobei das Fischfilet 10 auf der Hautseite 15 liegt. Dadurch weist der Streifen 17 aus Rotfleisch nach oben, wobei der Streifen 17 in Längsrichtung des Fischfilets 10 im Wesentlichen in Transportrichtung T ausgerichtet ist.

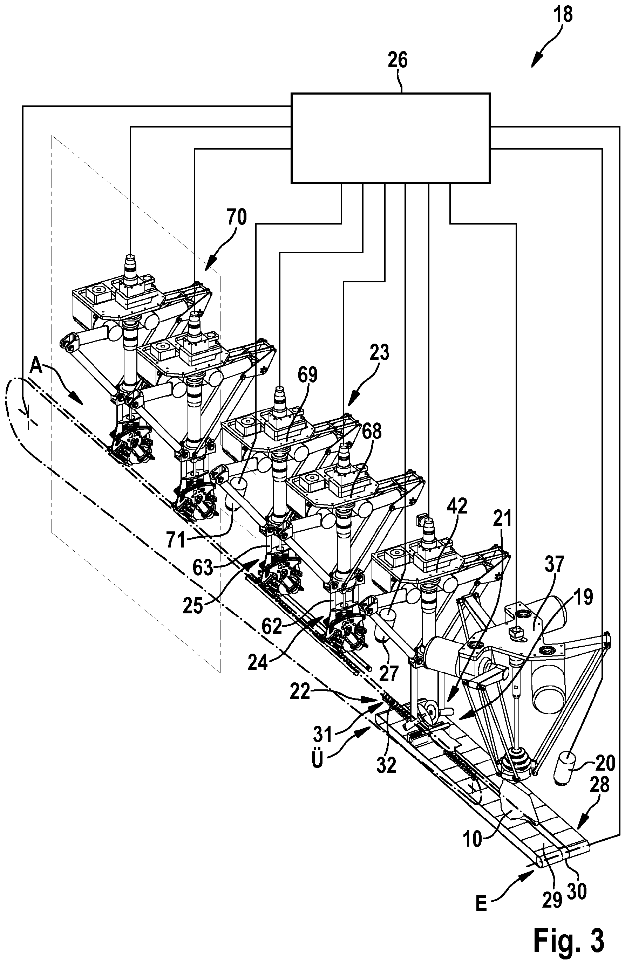

Die ab Figur 3 dargestellte Anordnung 18 ist zum automatischen Entfernen eines aus Rotfleisch, dem so genannten "dark meat", bestehenden Streifens 17 aus einem Fischfilet 10 ausgebildet und eingerichtet. Diese Anordnung 18 zeichnet sich erfindungsgemäß dadurch aus, dass sie gekennzeichnet ist durch eine Fördereinheit 19 zum Transportieren des zu verarbeitenden Fischfilets 10 von einem Eingabebereich E des Fischfilets 10 in die Anordnung 18 zu einem Ausgabebereich A des Fischfilets 10 aus der Anordnung 18 in Transportrichtung T entlang eines Transportpfads, sowie ausgehend vom Eingabebereich E in Richtung des Ausgabebereiches A nacheinander entlang des Transportpfads ein erstes Mittel 20 zum Erkennen des Rotfleisches in dem zu verarbeitenden Fischfilet 10, eine erste Schneidvorrichtung 21 zum Entfernen eines mittleren, zentralen Teilstreifens des Rotfleisches aus dem Fischfilet 10, ein Mittel 22 zum Aufklappen des vom mittleren Teilstreifen befreiten Fischfilets 10 derart, dass die durch die erste Schneidvorrichtung 21 entstehenden Schnittflächen F₁ und F₂ eines bauchseitigen und noch am Fischfilet 10 befindlichen Teilstreifens des Rotfleisches und eines rückenseitigen und noch am Fischfilet 10 befindlichen Teilstreifens des Rotfleisches von der Fördereinheit 19 weg nach oben weisend ausgerichtet sind, eine Schneideinheit 23 zum Entfernen des bauchseitigen und des rückenseitigen Teilstreifens des Rotfleisches aus dem Fischfilet 10, wobei die Schneideinheit 23 eine zweite Schneidvorrichtung 24 zum Entfernen des bauchseitigen Teilstreifens und eine dritte Schneidvorrichtung 25 zum Entfernen des rückenseitigen Teilstreifens aufweist, sowie eine Steuerungseinrichtung 26, wobei mindestens das Mittel 20 zum Erkennen des Rotfleisches sowie die drei Schneidvorrichtungen 21, 24, 25 mit der Steuerungseinrichtung 26 verbunden sind, derart, dass sämtliche Schnitte auf der Basis der vom Mittel 20 zur Erkennung des Rotfleisches ermittelten Daten und/oder Informationen ausführbar sind.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig die weiter oben beschriebene Anordnung 18 weiterbilden können.

Die Fördereinheit 19 weist nicht explizit dargestellte Antriebsmittel zum umlaufenden und vorzugsweise kontinuierlichen Antrieb auf. Die Antriebsmittel sind bevorzugt ebenfalls mit der Steuerungseinrichtung 26 verbunden. Das erste Mittel 20 zum Erkennen des Rotfleisches kann z.B. eine Kamera umfassen. Anstelle der Kamera oder ergänzend zur Kamera kann das Mittel 20 auch ein Röntgengerät oder andere Geräte umfassen, mittels der die Größe und/oder Ausdehnung und/oder Ausrichtung und/oder Orientierung und/oder Verlauf des aus Rotfleisch bestehenden Streifens 17 innerhalb des Muskelfleisches 16 detektierbar ist.

Vorzugsweise ist in Transportrichtung T zwischen dem Mittel 22 zum Aufklappen des Fischfilets 10 und der Schneideinheit 23 ein zweites Mittel 27 zum Erkennen des verbliebenen Rotfleisches in dem zu verarbeitenden Fischfilet 10 angeordnet, wobei das zweite Mittel 27 zum Erkennen des Rotfleisches ebenfalls mit der Steuerungseinrichtung 26 verbunden ist. Anders ausgedrückt befindet sich das zweite Mittel 27 zum Erkennen des Rotfleisches zwischen der ersten Schneidvorrichtung 21 und der Schneideinheit 23. Das zweite Mittel 27 zum Erkennen des Rotfleisches ist entsprechend dem ersten Mittel 20 zum Erkennen des Rotfleisches ausgebildet und eingerichtet.

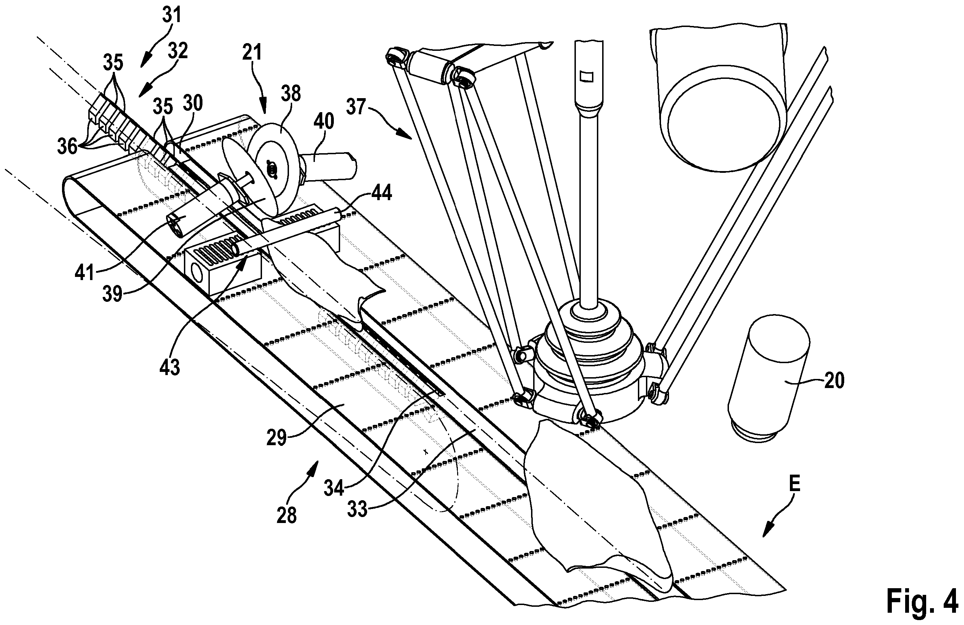

In Figur 4 ist der Eingabebereich E des Fischfilets 10 vergrößert dargestellt. Die Fördereinheit 19 umfasst mehrere Förderelemente, wobei ein erstes Förderelement 28 im Bereich der ersten Schneidvorrichtung 21 ein umlaufend angetriebenes Doppelband 29 mit einem mittig und parallel zur Transportrichtung T verlaufenden Spalt 30 ist, während ein zweites Förderelement 31 im Bereich der Schneideinheit 23 eine im Querschnitt dreieckförmige, umlaufend angetriebene Segmentkette 32 ist. Das Doppelband 29 kann aus zwei völlig getrennten Bändern mit separaten Führungs- und Antriebselementen sein. In anderen Ausführungsformen können zwei Teilbänder beabstandet zueinander auf denselben Führungs- und Antriebselementen angeordnet sein. Der Spalt 30 kann sich über einen Teil der Länge des Doppelbandes 29 oder über die gesamte Länge des Doppelbandes 29 erstrecken, wobei der in Transportrichtung T ausgerichtete Spalt 30 in allen Ausführungsformen mittig angeordnet ist, derart, dass der Spalt 30 das Doppelband 29 symmetrisch teilt. Insbesondere für den Fall, dass sich der Spalt 30 über die gesamte Länge des Doppelbandes 29 erstreckt, kann der Spalt 30 durch eine Abdeckung 33 mindestens teilweise abgedeckt sein.

Die Segmentkette 32 ist überlappend zum Doppelband 29 angeordnet. Das bedeutet, dass die Segmentkette 32 entlang des Transportpfads bereits beginnt, bevor das Doppelband 29 endet, so dass jedes Fischfilet 10 im Überlappungsbereich sowohl auf dem Doppelband 29 liegt als auch von der Segmentkette 32 gestützt wird. Im Überlappungsbereich weist auch die Abdeckung 33 einen Spalt 34 auf, der es ermöglicht, dass die Segmentkette 32 zumindest mit ihren nach oben in Richtung der Schneidvorrichtung 21 weisenden Spitzen 35 der einzelnen Segmente 36 durch den Spalt 30 des Doppelbandes 29 und den Spalt 34 der Abdeckung 33 über die von dem Doppelband 29 aufgespannten Ebene (bezogen auf die Oberfläche des Doppelbandes 29) hinausragt. In anderen Ausführungsformen kann die Segmentkette 32 selbst mit ihren Spitzen 35 in oder unterhalb der vom Doppelband 29 aufgespannten Ebene liegen. Das Doppelband 29 und die Segmentkette 32 sind mittels der Steuerungseinrichtung 26 individuell steuerbar. Bevorzugt sind das Doppelband 29 und die Segmentkette 32 mittels der Steuerungseinrichtung 26 synchron steuerbar, derart, dass sie z.B. mit gleicher Antriebsgeschwindigkeit angetrieben sind.

In Transportrichtung T zwischen dem im Eingabebereich E angeordneten ersten Mittel 20 zum Erkennen des Rotfleisches und der ersten Schneidvorrichtung 21 zum Entfernen des mittleren, zentralen Teilstreifens ist eine Handhabungseinrichtung 37 zum automatischen Ausrichten des zu verarbeitenden Fischfilets 10 auf der Fördereinheit 19, im Beispiel auf dem Doppelband 29, angeordnet, wobei die Handhabungseinrichtung 37 ebenfalls mit der Steuerungseinrichtung 26 verbunden ist. Bevorzugt umfasst die Handhabungseinrichtung 37 eine Robotermechanik, z.B. eine Deltakinematik, mit einem nicht explizit dargestellten Ausrichtwerkzeug. Das Ausrichtwerkzeug kann z.B. Mittel zum Greifen und/oder Saugen aufweisen, mittels dem das Fischfilet 10 auf dem Doppelband 29 in Transportrichtung T und insbesondere quer zur Transportrichtung T versetzt und vor allem auch um eine vertikale Achse gedreht werden kann, damit der Streifen 17 aus Rotfleisch mindestens teilweise, vorzugsweise jedoch vollständig, mittig im Bereich des Spaltes 30 liegt. Besonders bevorzugt kann das Ausrichtwerkzeug z.B. einen Stempel oder dergleichen umfassen, mittels dem das Fischfilet 10 auf dem Doppelband 29 liegend verschoben und/oder gedreht werden kann.

Die Handhabungsvorrichtung 37 ist insbesondere dazu ausgebildet und eingerichtet, die Fischfilets 10 automatisch auf dem Doppelband 29 auszurichten, derart, dass die Fischfilets 10 bezüglich ihrer Lage/Position auf der Segmentkette 32 vorpositioniert sind. Die Handhabungsvorrichtung 37 kann auch dann besonders bevorzugt sein, wenn die erste Schneidvorrichtung 21 zwei V-förmig in einem festen Winkel zueinander angestellte Kreismesser 38, 39 sowie Antriebsmittel 40, 41 für die Kreismesser 38, 39 umfasst, wobei die beiden Kreismesser 38, 39 vertikal und horizontal verstellbar ausgebildet sind. Die Verstellbarkeit der Kreismesser 38, 39 ist manuell oder automatisiert realisierbar. Besonders bevorzugt ist die erste Schneidvorrichtung 21 an einer Robotermechanik 42, z.B. einer Parallelkinematik, angeordnet, mittels der die Position der ersten Schneidvorrichtung 21 relativ zur Fördereinheit 19, im Beispiel also relativ zum Doppelband 29, mindestens in vertikaler und horizontaler Richtung verstellbar ist, wobei die Robotermechanik 42 ebenfalls mit der Steuerungseinrichtung 26 verbunden ist.

Im Bereich des Doppelbandes 29 sind optional Fixiermittel 43 vorgesehen, derart, dass das Fischfilet 10 mindestens beim Entfernen des mittleren, zentralen Teilstreifens auf dem Doppelband 29 fixierbar ist. In der dargestellten Ausführungsform ist z.B. eine Andrückwalze 44 vorgesehen, die in Transportrichtung T vor der Schneidvorrichtung 21 oberhalb des Doppelbandes 29 angeordnet und quer zur Transportrichtung T ausgerichtet ist und das Fischfilet 10 von oben auf das Doppelband 29 drückt. Eine entsprechende Andrückwalze 44 oder ein anderes Mittel zum Niederhalten kann alternativ oder ergänzend auch in Transportrichtung T hinter der Schneidvorrichtung 21 angeordnet sein. Es sind auch Saugeinheiten als Fixiermittel 43 einsetzbar, mittels denen das Fischfilet 10 von unten an das Doppelband 29 angesaugt wird. Die oder jede Andrückwalze 44 oder dergleichen kann aktiv angetrieben sein. Die entsprechenden Antriebsmittel können mit der Steuerungseinrichtung 26 verbunden sein. Bevorzugt ist die oder jede Andrückwalze 44 bezüglich der Antriebsgeschwindigkeit synchron zum Doppelband 29 angetrieben.

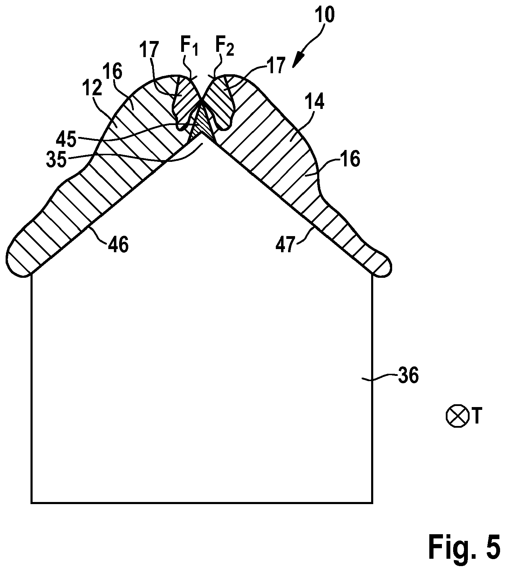

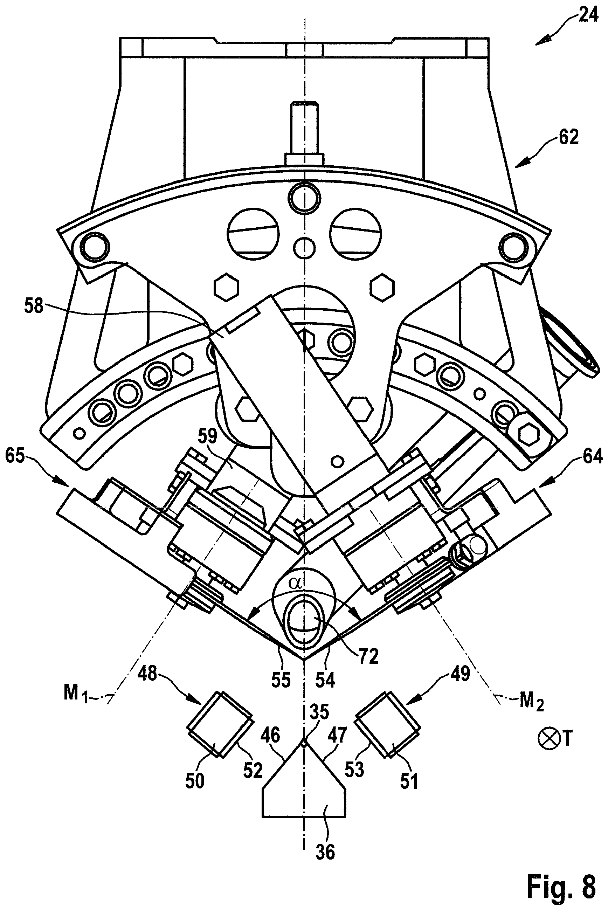

Das Doppelband 29 und die Segmentkette 32 bilden in Transportrichtung T eine durchgängige Fördereinheit 19 entlang des Transportpfads, wobei die Segmentkette 32 - wie weiter oben beschrieben - zur Übernahme der Fischfilets 10 vom Doppelband 29 mindestens im Übergangsbereich Ü vom Doppelband 29 zur Segmentkette 32 von unten durch den Spalt 30 in das Doppelband 29 greift. Die Segmentkette 32 ist aus einer Vielzahl von Segmenten 36 gebildet. Jedes Segment 36 ist im Querschnitt dreieckförmig bzw. dachförmig ausgebildet (siehe z.B. Figuren 5 und 8). Auf der in Richtung der Schneidvorrichtungen 24, 25 weisenden Oberseite weist vorzugsweise jedes Segment 36 einen dornartigen Vorsprung 45, also eine Art Spike, auf. In anderen Ausführungsformen können auch nur einige der Segmente 36 einen solchen Vorsprung 45 aufweisen, wobei der Vorsprung 45 auch nur eine angeraute Oberfläche oder jedes andere Mittel zum Halten oder Eindringen in das Fischfilet 10 sein kann.

Durch ihre Form und Ausgestaltung bildet die Segmentkette 32 optional das Mittel 22 zum Aufklappen der Fischfilets 10. Auf dem Doppelband 29 liegen die Fischfilets 10 mit ihrer Hautseite 15 flach auf dem Doppelband 29. Durch die Übernahme der Fischfilets 10 durch die Segmentkette 32 fallen die Teilfilets12, 14 - unterstützt durch das Entfernen des mittleren, zentralen Teilstreifens des Rotfleisches - nach dem Verlassen des Doppelbandes 29 zur Seite und nach unten, so dass die Teilfilets 12, 14, die ja noch miteinander verbunden sind, mit ihrer Hautseite 15 auf den schräg nach unten verlaufenden Flächen 46, 47 der Segmente 36 liegen, wodurch die Schnittflächen F₁ und F₂ aus einer einander zugekehrten Position in eine Position gebracht werden, in der die Schnittflächen F₁ und F₂ weiter nach oben in Richtung der Schneidvorrichtungen 24, 25 gerichtet sind (siehe insbesondere Figur 5). Andere Mittel 22 zum Aufklappen der Fischfilets 10 zusätzlich und separat zur Segmentkette 32 sind ebenfalls einsetzbar. Beispielsweise kann oberhalb der Segmentkette Mittel zum aktiven Auffalten der Teilfilets angeordnet sein.

Bevorzugt sind der Segmentkette 32 mindestens im Bereich der Schneideinheit 23 Niederhalter 48, 49 zugeordnet, derart, dass die aufgeklappten Fischfilets 10 zu beiden Seiten der Segmentkette 32 zwischen Niederhalter 48, 49 und Segmentkette 32 mindestens beim Entfernen der bauchseitigen und rückenseitigen Teilstreifen fixierbar sind. Die Niederhalter 48, 49 können z.B. einfache Rundprofile sein. Bevorzugt sind die Niederhalter 48, 49 jedoch umlaufend angetriebene Förderbänder 50, 51, deren Führungsflächen 52, 53 vorzugsweise parallel zu den Flächen 46, 47 der Segmente 36 ausgerichtet sind (siehe insbesondere Figur 8). Der Abstand der Führungsflächen 52, 53 zu den Flächen 46, 47 der Segmente 36 ist einstellbar. Die Niederhalter 48, 49 sind vorzugsweise zur Unterstützung der Segmentkette 32 als Mittel 22 zum Aufklappen als aktives Mittel zum Unterstützen des Aufklappens der Teilfilets 12, 14 ausgebildet und eingerichtet und halten die Teilfilets 12, 14 in der aufgespreizten Stellung.

Oberhalb der Segmentkette 32 mit den Niederhaltern 48, 49 sind die zweite und die dritte Schneidvorrichtung 24, 25 angeordnet. Die zweite und die dritte Schneidvorrichtung 24, 25 umfassen jeweils zwei V-förmig zueinander angestellte Kreismesser 54, 55; 56, 57 sowie Antriebsmittel 58, 59; 60, 61 für die Kreismesser 54 bis 57. In einer einfachen Ausführungsform können die Schneidvorrichtungen 24, 25 wie die Schneidvorrichtung 21 ausgebildet sein, also u.a. mit zwei V-förmig in einem festen Winkel zueinander angestellten Kreismessern 54, 55; 56, 57, die vertikal und horizontal verstellbar ausgebildet sind. Anstelle der Kreismesser 54 bis 57, insbesondere in der zweiten und dritten Schneidvorrichtung 24, 25, können auch Ringmesser, so genannte Whizard-Messer eingesetzt werden.

Bevorzugt weisen die zweite und die dritte Schneidvorrichtung 24, 25 jeweils einen Messerträger 62, 63 auf, dem zwei Messereinheiten 64, 65; 66, 67 zugeordnet sind, wobei jede Messereinheit 64 bis 67 ein Kreismesser 54 bis 57 und ein Antriebsmittel 58 bis 61 zum rotierenden Antreiben des Kreismessers 54 bis 57 um eine Drehmittelachse M₁, M₂ umfasst, wobei die beiden Kreismesser 54, 55; 56, 57 in einer einen Winkel α einschließenden Position im Wesentlichen V-förmig zueinander angestellt sind und die Größe des Winkels α durch eine verstellbare Anordnung der Messereinheiten 64 bis 67 am Messerträger 62, 63 einstellbar ist, wobei der Versatz der beiden Drehmittelachsen M₁, M₂ voneinander in Transportrichtung T gleich Null ist und die beiden Messereinheiten 64, 65; 66, 67 ausschließlich synchron zueinander verstellbar ausgebildet und eingerichtet sind.

Vorzugsweise sind die zweite und die dritte Schneidvorrichtung 24, 25 in Transportrichtung T hintereinander angeordnet und jeweils an einer Robotermechanik 68, 69, z.B. einer Parallelkinematik, angeordnet, wobei die Robotermechaniken 68, 69 ebenfalls mit der Steuerungseinrichtung 26 verbunden sind. In der dargestellten Ausführungsform ist in Transportrichtung T zunächst die zweite Schneidvorrichtung 24 zum Entfernen des bauchseitigen Streifens und anschließend die dritte Schneidvorrichtung 25 zum Entfernen des rückenseitigen Teilstreifens angeordnet. Die Reihenfolge der Schneidvorrichtungen 24, 25, kann jedoch auch umgekehrt sein.

In Transportrichtung T hinter der ersten die zweite und dritte Schneidvorrichtung 24, 25 umfassenden Schneideinheit 23 ist optional eine zweite Schneideinheit 70 angeordnet, die der ersten Schneideinheit 23 einspricht, wobei die zweite Schneideinheit 70 ebenfalls mit der Steuerungseinrichtung 26 verbunden ist. Weitere Schneideinheiten mit entsprechender Ausbildung können vorgesehen sein. In Transportrichtung T hinter der ersten Schneideinheit 23 und vor der zweiten Schneideinheit 70 ist ein drittes Mittel 71 zum Erkennen von Rotfleisch angeordnet, wobei das dritte Mittel 71 zum Erkennen von Rotfleisch ebenfalls mit der Steuerungseinrichtung 26 verbunden ist. Das dritte Mittel 71 zum Erkennen des Rotfleisches ist entsprechend dem ersten Mittel 20 und dem zweiten Mittel 27 zum Erkennen des Rotfleisches ausgebildet und eingerichtet. Im Bereich einzelner Schneidvorrichtungen 21, 24, 25 oder jeder Schneidvorrichtung 21, 24, 25 sind optional Mittel 72, 73 zum Absaugen der entfernten Teilstreifen angeordnet. Z.B. sind Saugrohre sind in Transportrichtung T hinter den jeweiligen Kreismesserpaaren 38, 39; 54, 55; 56, 57 angeordnet, wobei die Saugöffnungen der Saugrohre entgegen der Transportrichtung T gerichtet sind. Alle Komponenten zur Verarbeitung der Fischfilets 10, also zumindest die Mittel 20, 27, 71 zum Erkennen des Rotfleisches und sämtliche Schneidvorrichtungen 21, 24, 25, sind oberhalb der Fördereinheit 19 angeordnet, so dass eine Verarbeitung der Fischfilets 10 von oben erfolgt.

Alle am Verarbeitungsprozess beteiligten Komponenten, also insbesondere die Mittel 20, 27, 71 zum Erkennen des Rotfleisches, sämtliche Schneidvorrichtungen 21, 24, 25, entweder direkt oder über die Robotermechaniken 42, 68, 69, sowie die Handhabungseinrichtung 37 und die Antriebsmittel der Förderelemente 28, 31 sind über Leitungen oder leitungslos vorzugsweise mit der Steuerungseinrichtung 26 verbunden, wobei die Steuerungseinrichtung 26 u.a. mindestens eine Auswerteeinheit, mindestens eine Speichereinheit sowie mindestens eine Steuermodul zum aktiven Steuern der einzelnen Komponenten umfasst. Die Steuerungseinrichtung 26 kann als speicherprogrammierbare Steuerung oder als mikroprozessorbasierte Steuerung ausgebildet sein.

Im Folgenden wird das Verfahren zum automatischen Entfernen eines aus Rotfleisch, dem so genannten "dark meat", bestehenden Streifens 17 aus einem Fischfilet 10 anhand der Zeichnung näher erläutert, wobei sich das Verfahren durch die Kombination der folgende Schritte auszeichnet:
Die zu bearbeitenden Fischfilets 10 werden mittels einer Fördereinheit 19 automatisch entlang eines Transportpfads von einem Eingabebereich E zu einem Ausgabebereich A in Transportrichtung T transportiert. Entlang des Transportpfads wird zunächst mittels eines Mittels 20 zur Erkennung des Rotfleisches das Rotfleisch in dem zu verarbeitenden Fischfilet 10 automatisch erkannt. Anschließend wird ein mittlerer, zentraler Teilstreifen des Rotfleisches aus dem Fischfilet 10 mittels einer ersten Schneidvorrichtung 21 automatisch geschnitten. Nach dem ersten Schnitt wird das vom mittleren Teilstreifen befreite Fischfilet 10 mittels eines Mittels 22 zum Aufklappen automatisch aufgeklappt, derart, dass die beim Entfernen des mittleren, zentralen Teilstreifens gebildeten Schnittflächen F₁, F₂ eines bauchseitigen und noch am Fischfilet 10 befindlichen Teilstreifens des Rotfleisches und eines rückenseitigen und noch am Fischfilet 10 befindlichen Teilstreifens des Rotfleisches von der Fördereinheit 19 weg nach oben weisend ausgerichtet sind. In der aufgeklappten Position werden der bauchseitige und rückenseitige Teilstreifen mittels einer zweiten und einer dritten Schneidvorrichtung 24, 25 automatisch aus dem Fischfilet 10 geschnitten. Zum Ausführen der automatischen Schnitte zum Entfernen aller drei Teilstreifen aus dem Fischfilet 10 werden die Schneidvorrichtungen 21, 24, 25 mittels einer Steuerungseinrichtung 26 auf der Basis der vom Mittel 20 zur Erkennung des Rotfleisches ermittelten Daten und/oder Informationen gesteuert.

Vorzugsweise werden bei der Steuerung der Schneidvorrichtungen 21, 24, 25 auch die Daten und/oder Informationen der Antriebsmittel für die Fördereinheit 19 verwendet. Im Vordergrund des erfindungsgemäßen Verfahrens steht die mehrstufige Entfernung des gesamten Streifens 17 des Rotfleisches. Der Streifen 17 des Rotfleisches wird in mindestens drei Schritten automatisch aus dem Fischfilet 10 geschnitten, wobei zuerst der mittlere, zentrale Teilstreifen aus dem Fischfilet 10 und anschließend zunächst der bauchseitige Teilstreifen und dann der rückenseitige Teilstreifen oder erst der rückenseitige Teilstreifen und dann der bauchseitige Teilstreifen des Rotfleisches aus dem Fischfilet geschnitten werden.

Optional wird das Fischfilet 10 vor dem ersten Schnitt mittels einer Handhabungseinrichtung 37 in Bezug auf die Schneidvorrichtung 21 automatisch in die optimale Position gebracht, in der der zu entfernende Streifen 17 mindestens überwiegend mittig im Bereich eines Spaltes 30 eines Doppelbandes 29 liegt und in seiner Längserstreckung im Wesentlichen parallel zur Transportrichtung T ausgerichtet ist. Die Handhabungseinrichtung 37 wird dazu von der Steuerungseinrichtung 26 angesteuert. Beim ersten automatischen Schnitt wird das Fischfilet 10 bevorzugt mittels eines Fixiermittels 43 auf dem Doppelband 29 gehalten bzw. an dieses gedrückt und/oder gesaugt. Nach dem ersten Schnitt wird das Fischfilet 10 von einer Segmentkette 32 der Fördereinheit 19 vom Doppelband 29 übernommen, wobei das Fischfilet 10 nach dem Verlassen des Doppelbandes 29 auf der Segmentkette 32 - vorzugsweise alleine durch Schwerkraft - automatisch aufklappt, indem die beiden Teilfilets 12, 14 seitlich und nach unten klappen. Die Teilfilets 12, 14 können jedoch optional auch aktiv in eine aufgeklappte Position gebracht werden.

Nach dem ersten Schnitt durch die Schneidvorrichtung 21 und vor dem zweiten Schnitt durch die Schneidvorrichtung 24 wird vorzugsweise erneut mittels eines Mittels 27 zur Erkennung des Rotfleisches das restliche/verbliebene Rotfleisch in dem zu verarbeitenden Fischfilet 10 automatisch erkannt. Beim zweiten und dritten automatischen Schnitt wird das Fischfilet 10 bevorzugt mittels Niederhaltern 48, 49 auf der Segmentkette 32 gehalten. Die Schneidvorrichtungen 24 und 25 können ebenso wie die Schneidvorrichtung 21 direkt angesteuert werden. Bevorzugt werden die Schneidvorrichtungen 21, 24, 25 jedoch über eine Robotermechanik 42, 68, 69 von der Steuerungseinrichtung 26 angesteuert.

Sämtliche Schnitte werden vorzugsweise mit paarweise angeordneten Kreismessern 38, 39; 54, 55; 56, 57 ausgeführt, die in einem Winkel V-förmig zueinander angestellt sind. Zumindest der zweite und der dritte Schnitt können auch mit einem Whizard-Messer ausgeführt werden. Vorzugsweise wird das Schneiden zunächst der bauchseitige Teilstreifen und dann der rückenseitige Teilstreifen oder umgekehrt in einem vierten und fünften Schnitt durch zusätzliche Schneidvorrichtungen entlang des Transportpfads wiederholt, wobei vor dem vierten Schnitt ein erneutes automatisches Erkennen des Rotfleisches in dem zu verarbeitenden Fischfilet 10 mittels eines Mittels 71 zur Erkennung des Rotfleisches erfolgt. Bevorzugt werden die durch das automatische Schneiden entfernten Teilstreifen automatisch abgesaugt.

Besonders bevorzugt wird das Verfahren mit einer Anordnung 18 nach einem oder mehreren der Ansprüche 1 bis 18 ausgeführt.

## Patentansprüche

1. Anordnung (18), ausgebildet und eingerichtet zum automatischen Entfernen eines aus Rotfleisch, dem so genannten "dark meat", bestehenden Streifens (17) aus einem Fischfilet (10), **gekennzeichnet durch** eine Fördereinheit (19) zum Transportieren des zu verarbeitenden Fischfilets (10) von einem Eingabebereich (E) des Fischfilets (10) in die Anordnung (18) zu einem Ausgabebereich (A) des Fischfilets (10) aus der Anordnung (18) in Transportrichtung T entlang eines Transportpfads, sowie ausgehend vom Eingabebereich (E) in Richtung des Ausgabebereiches (A) nacheinander entlang des Transportpfads ein erstes Mittel (20) zum Erkennen des Rotfleisches in dem zu verarbeitenden Fischfilet (10), eine erste Schneidvorrichtung (21) zum Entfernen eines mittleren, zentralen Teilstreifens des Rotfleisches aus dem Fischfilet (10), ein Mittel (22) zum Aufklappen des vom mittleren Teilstreifen befreiten Fischfilets (10) derart, dass die durch die erste Schneidvorrichtung (21) entstehenden Schnittflächen (F₁, F₂) eines bauchseitigen und noch am Fischfilet (10) befindlichen Teilstreifens des Rotfleisches und eines rückenseitigen und noch am Fischfilet (10) befindlichen Teilstreifens des Rotfleisches von der Fördereinheit (19) weg nach oben weisend ausgerichtet sind, eine Schneideinheit (23) zum Entfernen des bauchseitigen und des rückenseitigen Teilstreifens des Rotfleisches aus dem Fischfilet (10), wobei die Schneideinheit (23) eine zweite Schneidvorrichtung (24) zum Entfernen des bauchseitigen Teilstreifens und eine dritte Schneidvorrichtung (25) zum Entfernen des rückenseitigen Teilstreifens aufweist, sowie eine Steuerungseinrichtung (26), wobei mindestens das Mittel (20) zum Erkennen des Rotfleisches sowie die drei Schneidvorrichtungen (21, 24, 25) mit der Steuerungseinrichtung (26) verbunden sind, derart, dass sämtliche Schnitte auf der Basis der vom Mittel (20) zur Erkennung des Rotfleisches ermittelten Daten und/oder Informationen ausführbar sind.

2. Anordnung (18) nach Anspruch 1, **dadurch gekennzeichnet, dass** in Transportrichtung T zwischen dem Mittel (22) zum Aufklappen des Fischfilets (10) und der Schneideinheit (23) ein zweites Mittel (27) zum Erkennen des verbliebenen Rotfleisches in dem zu verarbeitenden Fischfilet (10) angeordnet ist, wobei das zweite Mittel (27) zum Erkennen des Rotfleisches ebenfalls mit der Steuerungseinrichtung (26) verbunden ist.

3. Anordnung (18) nach Anspruch 1 oder 2, **dadurch gekennzeichnet, dass** in Transportrichtung T zwischen dem im Eingabebereich (E) angeordneten ersten Mittel (20) zum Erkennen des Rotfleisches und der ersten Schneidvorrichtung (21) zum Entfernen des mittleren, zentralen Teilstreifens eine Handhabungseinrichtung (37) zum automatischen Ausrichten des zu verarbeitenden Fischfilets (10) auf der Fördereinheit (19) angeordnet ist, wobei die Handhabungseinrichtung (37) ebenfalls mit der Steuerungseinrichtung (26) verbunden ist.

4. Anordnung (18) nach Anspruch 3, **dadurch gekennzeichnet, dass** die Handhabungseinrichtung (37) eine Robotermechanik, z.B. eine Deltakinematik, mit einem Ausrichtwerkzeug umfasst.

5. Anordnung (18) nach einem oder mehreren der Ansprüche 1 bis 4, **dadurch gekennzeichnet, dass** die erste Schneidvorrichtung (21) zwei V-förmig in einem festen Winkel zueinander angestellte Kreismesser (38, 39) sowie Antriebsmittel (40, 41) für die Kreismesser (38, 39) umfasst, wobei die beiden Kreismesser (38, 39) vertikal und horizontal verstellbar ausgebildet sind.

6. Anordnung (18) nach einem oder mehreren der Ansprüche 1 bis 5, **dadurch gekennzeichnet, dass** die erste Schneidvorrichtung (21) an einer Robotermechanik (42), z.B. einer Deltakinematik, angeordnet ist, mittels der die Position der ersten Schneidvorrichtung (21) relativ zur Fördereinheit (19) mindestens in vertikaler und horizontaler Richtung verstellbar ist, wobei die Robotermechanik (42) ebenfalls mit der Steuerungseinrichtung (26) verbunden ist.

7. Anordnung (18) nach einem oder mehreren der Ansprüche 1 bis 6, **dadurch gekennzeichnet, dass** die zweite und die dritte Schneidvorrichtung (24, 25) jeweils zwei V-förmig zueinander angestellte Kreismesser (54, 55; 56, 57) sowie Antriebsmittel (58, 59; 60, 61) für die Kreismesser (54, 55; 56, 57) umfassen.

8. Anordnung (18) nach einem oder mehreren der Ansprüche 1 bis 7, **dadurch gekennzeichnet, dass** die zweite und die dritte Schneidvorrichtung (24, 25) jeweils einen Messerträger (62, 63) aufweisen, dem zwei Messereinheiten (64, 65; 66, 67) zugeordnet sind, wobei jede Messereinheit (64, 65; 66, 67) ein Kreismesser (54, 55; 56, 57) und ein Antriebsmittel (58, 59; 60, 61) zum rotierenden Antreiben des Kreismessers (54 bis 57) um eine Drehmittelachse M₁, M₂ umfasst, wobei die beiden Kreismesser (54, 55; 56, 57) in einer einen Winkel α einschließenden Position im Wesentlichen V-förmig zueinander angestellt sind und die Größe des Winkels α durch eine verstellbare Anordnung der Messereinheiten (64, 65; 66, 67) am Messerträger (62, 63) einstellbar ist, wobei der Versatz der beiden Drehmittelachsen (M₁, M₂) voneinander in Transportrichtung T gleich Null ist und die beiden Messereinheiten (64, 65; 66, 67) ausschließlich synchron zueinander verstellbar ausgebildet und eingerichtet sind.

9. Anordnung (18) nach einem oder mehreren der Ansprüche 1 bis 8, **dadurch gekennzeichnet, dass** die zweite und die dritte Schneidvorrichtung (24, 25) in Transportrichtung T hintereinander angeordnet und jeweils an einer Robotermechanik (68, 69), z.B. einer Deltakinematik, angeordnet sind, wobei die Robotermechaniken (68, 69) ebenfalls mit der Steuerungseinrichtung (26) verbunden sind.

10. Anordnung (18) nach einem oder mehreren der Ansprüche 1 bis 9, **dadurch gekennzeichnet, dass** die Fördereinheit (19) mehrere Förderelemente (28, 31) umfasst, wobei ein erstes Förderelement (28) im Bereich der ersten Schneidvorrichtung (21) ein umlaufend angetriebenes Doppelband (29) mit einem mittig und parallel zur Transportrichtung T verlaufenden Spalt (30) ist, während ein zweites Förderelement (31) im Bereich der Schneideinheit (23) eine im Querschnitt dreieckförmige, umlaufend angetriebene Segmentkette (32) ist.

11. Anordnung (18) nach Anspruch 10, **dadurch gekennzeichnet, dass** das Doppelband (29) und die Segmentkette (32) in Transportrichtung T eine durchgängige Fördereinheit (19) entlang des Transportpfads bilden, wobei die Segmentkette (32) zur Übernahme der Fischfilets (10) vom Doppelband (29) mindestens im Übergangsbereich (Ü) vom Doppelband (29) zur Segmentkette (32) von unten durch den Spalt (30) in das Doppelband (29) greift.

12. Anordnung (18) nach Anspruch 10 oder 11, **dadurch gekennzeichnet, dass** die Segmentkette (32) das Mittel (22) zum Aufklappen der Fischfilets (10) bildet.

13. Anordnung (18) nach einem oder mehreren der Ansprüche 10 bis 12, **dadurch gekennzeichnet, dass** die Segmentkette (32) auf ihrer in Richtung der Schneideinheit (23) weisenden Oberseite dornartige Vorsprünge (45) zum Fixieren der Fischfilets (10) auf der Segmentkette (32) aufweist.

14. Anordnung (18) nach einem oder mehreren der Ansprüche 10 bis 13, **dadurch gekennzeichnet, dass** der Segmentkette (32) mindestens im Bereich der Schneideinheit (23) Niederhalter (48, 49) zugeordnet sind, derart, dass die aufgeklappten Fischfilets (10) zu beiden Seiten der Segmentkette (32) zwischen Niederhalter (48, 49) und Segmentkette (32) mindestens beim Entfernen der bauchseitigen und rückenseitigen Teilstreifen fixierbar sind.

15. Anordnung (18) nach einem oder mehreren der Ansprüche 10 bis 14, **dadurch gekennzeichnet, dass** im Bereich des Doppelbandes (29) Fixiermittel (43) vorgesehen sind, derart, dass das Fischfilet (10) mindestens beim Entfernen des mittleren, zentralen Teilstreifens auf dem Doppelband (29) fixierbar ist.

16. Anordnung (18) nach einem oder mehreren der Ansprüche 1 bis 15, **dadurch gekennzeichnet, dass** in Transportrichtung T hinter der ersten die zweite und dritte Schneidvorrichtung (24, 25) umfassenden Schneideinheit (23) eine zweite Schneideinheit (70) angeordnet ist, die der ersten Schneideinheit (23) entspricht, wobei die zweite Schneideinheit (70) ebenfalls mit der Steuerungseinrichtung (26) verbunden ist.

17. Anordnung (18) nach Anspruch 16, **dadurch gekennzeichnet, dass** in Transportrichtung T hinter der ersten Schneideinheit (21) und vor der zweiten Schneideinheit (70) ein drittes Mittel (71) zum Erkennen von Rotfleisch angeordnet ist, wobei das dritte Mittel (71) zum Erkennen von Rotfleisch ebenfalls mit der Steuerungseinrichtung (26) verbunden ist.

18. Anordnung (18) nach einem oder mehreren der Ansprüche 1 bis 17, **dadurch gekennzeichnet, dass** im Bereich jeder Schneidvorrichtung (21, 24, 25) Mittel (72, 73) zum Absaugen der entfernten Teilstreifen angeordnet sind.

19. Verfahren zum automatischen Entfernen eines aus Rotfleisch, dem so genannten "dark meat", bestehenden Streifens (17) aus einem Fischfilet (10), **gekennzeichnet durch** die folgenden Schritte:
- automatisches Transportieren des zu bearbeitenden Fischfilets (10) entlang eines Transportpfads von einem Eingebbereich (E) zu einem Ausgabebereich (A) in Transportrichtung T mittels einer Fördereinheit (19),
- automatisches Erkennen des Rotfleisches in dem zu verarbeitenden Fischfilet (10) mittels eines Mittels (20) zur Erkennung des Rotfleisches,
- automatisches Schneiden eines mittleren, zentralen Teilstreifens des Rotfleisches aus dem Fischfilet (10) mittels einer ersten Schneidvorrichtung (21),
- automatisches Aufklappen des vom mittleren Teilstreifen befreiten Fischfilets (10) mittels eines Mittels (22) zum Aufklappen, derart, dass die beim Entfernen des mittleren, zentralen Teilstreifens gebildeten Schnittflächen (F₁, F₂) eines bauchseitigen und noch am Fischfilet (10) befindlichen Teilstreifens des Rotfleisches und eines rückenseitigen und noch am Fischfilet (10) befindlichen Teilstreifens des Rotfleisches von der Fördereinheit (19) weg nach oben weisend ausgerichtet sind,
- automatisches Schneiden des bauchseitigen und rückenseitigen Teilstreifens aus dem Fischfilet (10) mittels einer zweiten und einer dritten Schneidvorrichtung (24, 25),
- wobei die Schneidvorrichtungen (24, 25) mittels einer Steuerungseinrichtung (26) auf der Basis der vom Mittel (20) zur Erkennung des Rotfleisches ermittelten Daten und/oder Informationen gesteuert werden.

20. Verfahren nach Anspruch 19, **dadurch gekennzeichnet, dass** der Streifen des Rotfleisches in mindestens drei Schritten automatisch aus dem Fischfilet (10) geschnitten wird, wobei zuerst der mittlere, zentrale Teilstreifen aus dem Fischfilet (10) und anschließend zunächst der bauchseitige Teilstreifen und dann der rückenseitige Teilstreifen oder erst der rückenseitige Teilstreifen und dann der bauchseitige Teilstreifen des Rotfleisches aus dem Fischfilet (10) geschnitten werden.

21. Verfahren nach Anspruch 19 oder 20, **dadurch gekennzeichnet, dass** das Schneiden zunächst der bauchseitige Teilstreifen und dann der rückenseitige Teilstreifen oder umgekehrt in einem vierten und fünften Schritt durch zusätzliche Schneidvorrichtungen entlang des Transportpfads wiederholt wird, wobei vor dem vierten und fünften Schritt ein erneutes automatisches Erkennen des Rotfleisches in dem zu verarbeitenden Fischfilet (10) mittels eines Mittels (71) zur Erkennung des Rotfleisches erfolgt.

22. Verfahren nach einem oder mehreren der Ansprüche 19 bis 21, **dadurch gekennzeichnet, dass** jedes Fischfilet (10) während des Schneidens der Teilstreifen auf der Fördereinheit (19) fixiert wird.

23. Verfahren nach einem oder mehreren der Ansprüche 19 bis 22, **dadurch gekennzeichnet, dass** sämtliche Schnitte aller Teilstreifen durch V-förmig zueinander angestellte Kreismesser (28, 29; 54, 55; 56,57) ausgeführt werden.

24. Verfahren nach einem oder mehreren der Ansprüche 19 bis 23, **dadurch gekennzeichnet, dass** die durch das Schneiden entfernten Teilstreifen abgesaugt werden.

25. Verfahren nach einem oder mehreren der Ansprüche 19 bis 24, **dadurch gekennzeichnet, dass** es mit einer Anordnung (18) nach einem oder mehreren der Ansprüche 1 bis 18 ausgeführt wird.

## Claims

1. Arrangement (18), designed and configured for automatically removing a strip (17) consisting of red meat, the so-called dark meat, from a fish fillet (10), comprising a conveying unit (19) for transporting the fish fillet (10) to be processed from an inlet area (E) of the fish fillet (10) into the arrangement (18) to an outlet area (A) of the fish fillet (10) out of the arrangement (18) in transport direction T along a transport path and, starting from the inlet area (E) in the direction of the outlet area (A) successively along the transport path, a first means (20) for detecting red meat in the fish fillet to be processed (10), a first cutting apparatus (21) for removing a middle, central partial strip of red meat from the fish fillet (10), a means (22) for opening up the fish fillet (10) freed from the middle partial strip in such a manner that the cut surfaces (F₁, F₂) of a ventral-side partial strip of red meat still attached to the fish fillet (10) and of a dorsal-side partial strip of red meat still attached to the fish fillet (10), which are produced by the first cutting apparatus (21), point upwards away from the conveying unit (19), a cutting unit (23) for removing the ventral-side and the dorsal-side partial strip of red meat from the fish fillet (10), the cutting unit (23) comprising a second cutting apparatus (24) for removing the ventral-side partial strip and a third cutting apparatus (25) for removing the dorsal-side partial strip, as well as a control device (26), at least the means (20) for identifying red meat and the three cutting apparatuses (21, 24, 25) being connected to the control device (26), in such a manner that all cuts can be made based on the data and/or information determined by the means (20) for detecting red meat.

2. Arrangement (18) according to claim 1, **characterised in that** in transport direction T a second means (27) for detecting the remaining red meat in the fish fillet (10) to be processed is arranged between the means (22) for opening up the fish fillet (10) and the cutting unit (23), wherein the second means (27) for detecting red meat is also connected to the control device (26).

3. Arrangement (18) according to claim 1 or 2, **characterised in that**, in transport direction T, a handling device (37) for automatically aligning the fish fillet (10) to be processed on the conveying unit (19) is arranged between the first means (20) for detecting red meat, which is arranged in the inlet area (E), and the second cutting apparatus (21) for removing the middle, central partial strip, wherein the handling device (37) is also connected to the control device (26).

4. Arrangement (18) according to claim 3, **characterised in that** the handling device (37) comprises a robotic mechanism, e.g. a delta kinematics mechanism, with an alignment tool.

5. Arrangement (18) according to one or more of claims 1 to 4, **characterised in that** the first cutting apparatus (21) comprises two circular knives (38, 39) set in a V-shape at a fixed angle to each other and drive means (40, 41) for the circular knives (38, 39), wherein the two circular knives (38, 39) are designed to be vertically and horizontally adjustable.

6. Arrangement (18) according to one or more of claims 1 to 5, **characterised in that** the first cutting apparatus (21) is arranged on a robotic mechanism (42), e.g. a delta kinematics mechanism, by means of which the position of the first cutting apparatus (21) relative to the conveying unit (19) is adjustable at least vertically and horizontally, wherein the robotic mechanism (42) is also connected to the control device (26).

7. Arrangement (18) according to one or more of claims 1 to 6, **characterised in that** the second and the third cutting apparatus (24, 25) each comprise two circular knives (54, 55; 56, 57) set in a V-shape at a fixed angle to each other and drive means (58, 59; 60, 61) for the circular knives (54, 55; 56, 57).

8. Arrangement (18) according to one or more of claims 1 to 7, **characterised in that** the second and the third cutting apparatus (24, 25) each comprise a knife carrier (62, 63), to which two knife units (64, 65; 66, 67) are assigned, wherein each knife unit (64, 65; 66, 67) comprises a circular knife (54, 55; 56, 57) and a drive means (58, 59; 60, 61) for rotationally driving the circular knife (54 to 57) about a central axis of rotation M₁, M₂, wherein the two circular knives (54, 55; 56, 57) are set substantially in a V-shape to each other in a position enclosing an angle α and the size of the angle α can be set by an adjustable arrangement of the knife units (64, 65; 66, 67) on the knife carrier (62, 63), wherein the offset of the two central axes of rotation (M₁, M₂) to each other is equal to zero in transport direction T and the two knife units (64, 65; 66, 67) are designed and configured to be adjustable exclusively synchronously with each other.

9. Arrangement (18) according to one or more of claims 1 to 8, **characterised in that** the second and the third cutting apparatus (24, 25) are arranged one behind the other in transport direction T and each on a robotic mechanism (68, 69), e.g. a delta kinematics mechanism, wherein the robotic mechanisms (68, 69) are also connected to the control device (26).

10. Arrangement (18) according to one or more of claims 1 to 9, **characterised in that** the conveying unit (19) comprises a plurality of conveying elements (28, 31), wherein a first conveying element (28) in the region of the first cutting apparatus (21) is a rotationally driven double belt (29) with a gap (30) running centrally and parallel to the transport direction T, while a second conveying element (31) in the region of the cutting unit (23) is a rotationally driven segment chain (32) which is triangular in cross-section.

11. Arrangement (18) according to claim 10, **characterised in that** the double belt (29) and the segment chain (32) form a continuous conveying unit (19) along the transport path in transport direction T, wherein the segment chain (32) engages in the double belt (29) from below through the gap (30), at least in the transition region (Ü) from the double belt (29) to the segment chain (32), for transferring the fish fillets (10) from the double belt (29).

12. Arrangement (18) according to claim 10 or 11, **characterised in that** the segment chain (32) forms the means (22) for opening up the fish fillets (10).

13. Arrangement (18) according to one or more of claims 10 to 12, **characterised in that** the segment chain (32) has spike-like protrusions (45), on its upper side pointing in the direction of the cutting unit (23), for fastening the fish fillets (10) on the segment chain (32).

14. Arrangement (18) according to one or more of claims 10 to 13, **characterised in that** devices (48, 49) for holding the fish down are assigned to the segment chain (32) at least in the region of the cutting unit (23), in such a manner that the opened up fish fillets (10) can be fastened on both sides of the segment chain (32), between device (48, 49) for holding the fish down and segment chain (32), at least when removing the ventral-side and dorsal-side partial strips.

15. Arrangement (18) according to one or more of claims 10 to 14, **characterised in that** fastening means (43) are provided in the region of the double belt (29), in such a manner that the fish fillet (10) can be fastened on the double belt (29) at least when removing the middle, central partial strip.

16. Arrangement (18) according to one or more of claims 1 to 15, **characterised in that** a second cutting unit (70), corresponding to the first cutting unit (23), is arranged downstream of said first cutting unit (23), which comprises the second and third cutting apparatus (24, 25), in transport direction T, wherein the second cutting unit (70) is also connected to the control device (26).

17. Arrangement (18) according to claim 16, **characterised in that** a third means (71) for detecting red meat is arranged downstream of the first cutting unit (21) and upstream of the second cutting unit (70) in transport direction T, wherein the third means (71) for detecting red meat is also connected to the control device (26).

18. Arrangement (18) according to one or more of claims 1 to 17, **characterised in that** suction means (72, 73) for extracting the removed partial strips by suction are arranged in the region of each cutting apparatus (21, 24, 25).

19. Method for automatically removing a strip (17) consisting of red meat, the so-called dark meat, from a fish fillet (10), wherein the method comprises the following steps:
- automatically transporting the fish fillet (10) to be processed along a transport path from an inlet area (E) to an outlet area (A) in transport direction T by means of a conveying unit (19),
- automatically detecting the red meat in the fish fillet (10) to be processed using a means (20) for detecting red meat,
- automatically cutting a middle, central partial strip of red meat from the fish fillet (10) using a first cutting apparatus (21),
- automatically opening up the fish fillet (10) freed from the middle, central partial strip using a means (22) for opening up, in such a manner that the cut surfaces (F₁, F₂) of a ventral-side partial strip of red meat still attached to the fish fillet (10) and a dorsal-side partial strip of red meat still attached to the fish fillet (10), which are formed when removing the middle, central partial strip, point upwards away from the conveying unit (19),
- automatically cutting the ventral-side and dorsal-side partial strip from the fish fillet (10) using a second and a third cutting apparatus (24, 25),
- wherein the cutting apparatuses (24, 25) are controlled using a control device (26) based on the data and/or information determined by the means (20) for detecting red meat.

20. Method according to claim 19, **characterised in that** the strip of red meat is automatically cut from the fish fillet (10) in at least three steps, wherein first the middle, central partial strip is cut from the fish fillet (10) and subsequently first the ventral-side partial strip and then the dorsal-side partial strip or first the dorsal-side partial strip and then the ventral-side partial strip of red meat are cut from the fish fillet (10).

21. Method according to claim 19 or 20, **characterised in that** the cutting, first of the ventral-side partial strip and then the dorsal-side partial strip or vice versa, is repeated in a fourth and fifth step by additional cutting apparatuses along the transport path, wherein the red meat in the fish fillet (10) to be processed is automatically detected again before the fourth and fifth step using a means (71) for detecting red meat.

22. Method according to one or more of claims 19 to 21, **characterised in that** each fish fillet (10) is fastened to the conveying unit (19) during the cutting of the partial strips.

23. Method according to one or more of claims 19 to 22, **characterised in that** all cuts of all partial strips are made by circular knives (28, 29; 54, 55; 56, 57) set in a V-shape to each other.

24. Method according to one or more of claims 19 to 23, **characterised in that** the partial strips removed by cutting are extracted by suction.

25. Method according to one or more of claims 19 to 24, **characterised in that** it is carried out with an arrangement (18) according to one or more of claims 1 to 18.

## Revendications

1. Agencement (18), configuré et adapté pour retirer automatiquement d'un filet de poisson (10) une bande (17) constituée de ce que l'on appelle « chair grise », comprenant une unité de transport (19) pour transporter le filet de poisson (10) à traiter depuis une zone d'entrée (E) du filet de poisson (10) dans l'agencement (18) jusqu'à une zone de sortie (A) du filet de poisson (10) de l'agencement (18) dans la direction de transport T le long d'un chemin de transport, ainsi qu'en partant de la zone d'entrée (E) en direction de la zone de sortie (A), successivement le long du chemin de transport, un premier moyen (20) pour détecter la chair grise dans le filet de poisson (10) à traiter, un premier dispositif de découpe (21) pour retirer du filet de poisson (10) une bande partielle centrale médiane de la chair grise, un moyen (22) pour ouvrir le filet de poisson (10) débarrassé de la bande partielle médiane de telle sorte que les surfaces de découpe (F₁, F₂), formées par le premier dispositif de découpe (21), d'une bande partielle de la chair grise située du côté du ventre et se trouvant encore sur le filet de poisson (10) et d'une bande partielle de la chair grise située du côté du dos et se trouvant encore sur le filet de poisson (10) sont orientées vers le haut à l'opposé de l'unité de transport (19), une unité de découpe (23) pour retirer du filet de poisson (10) la bande partielle de chair grise située du côté du ventre et située du côté du dos, l'unité de découpe (23) présentant un deuxième dispositif de découpe (24) pour retirer la bande partielle située du côté du ventre et un troisième dispositif de découpe (25) pour retirer la bande partielle située du côté du dos, ainsi qu'un appareil de commande (26), au moins le moyen (20) pour détecter la chair grise ainsi que les trois dispositifs de découpe (21, 24, 25) étant reliés à l'appareil de commande (26) de telle sorte que toutes les découpes peuvent être effectuées sur la base des données et/ou des informations déterminées par le moyen (20) pour détecter la chair grise.

2. Agencement (18) selon la revendication 1, **caractérisé en ce que**, dans la direction de transport T, entre le moyen (22) pour ouvrir le filet de poisson (10) et l'unité de découpe (23), est agencé un deuxième moyen (27) pour détecter la chair grise restante dans le filet de poisson (10) à traiter, le deuxième moyen (27) pour détecter la chair grise étant également relié à l'appareil de commande (26).

3. Agencement (18) selon la revendication 1 ou 2, **caractérisé en ce que**, dans la direction de transport T, entre le premier moyen (20) pour détecter la chair grise agencé dans la zone d'entrée (E) et le premier dispositif de découpe (21) pour retirer la bande partielle centrale médiane, est agencé un appareil de manipulation (37) pour orienter automatiquement le filet de poisson (10) à traiter sur l'unité de transport (19), l'appareil de manipulation (37) étant également relié à l'appareil de commande (26).

4. Agencement (18) selon la revendication 3, **caractérisé en ce que** l'appareil de manipulation (37) comprend un mécanisme robotique, p. ex. une cinématique delta, avec un outil d'orientation.

5. Agencement (18) selon une ou plusieurs des revendications 1 à 4, **caractérisé en ce que** le premier dispositif de découpe (21) comprend deux lames circulaires (38, 39) inclinées en forme V selon un angle fixe l'une par rapport à l'autre, ainsi que des moyens d'entraînement (40, 41) pour les lames circulaires (38, 39), les deux lames circulaires (38, 39) étant configurées pour pouvoir être réglées verticalement et horizontalement.

6. Agencement (18) selon une ou plusieurs des revendications 1 à 5, **caractérisé en ce que** le premier dispositif de découpe (21) est agencé sur un mécanisme robotique (42), p. ex. une cinématique delta, au moyen duquel la position du premier dispositif de découpe (21) par rapport à l'unité de transport (19) peut être réglée au moins dans la direction verticale et horizontale, le mécanisme robotique (42) étant également relié à l'appareil de commande (26).

7. Agencement (18) selon une ou plusieurs des revendications 1 à 6, **caractérisé en ce que** le deuxième et le troisième dispositif de découpe (24, 25) comprennent chacun deux lames circulaires (54, 55 ; 56, 57) inclinées en forme de V l'une par rapport à l'autre, ainsi que des moyens d'entraînement (58, 59 ; 60, 61) pour les lames circulaires (54, 55 ; 56, 57).

8. Agencement (18) selon une ou plusieurs des revendications 1 à 7, **caractérisé en ce que** le deuxième et le troisième dispositif de découpe (24, 25) présentent chacun un support de lame (62, 63), auquel sont associés deux unités de lame (64, 65 ; 66, 67), chaque unité de lame (64, 65 ; 66, 67) comprenant une lame circulaire (54, 55 ; 56, 57) et un moyen d'entraînement (58, 59 ; 60, 61) pour entraîner en rotation la lame circulaire (54 à 57) autour d'un axe médian de rotation M₁, M₂, les deux lames circulaires (54, 55 ; 56, 57) étant inclinées essentiellement en forme de V l'une par rapport à l'autre dans une position formant un angle α et la valeur de l'angle α pouvant être ajustée par un agencement réglable des unités de lame (64, 65 ; 66, 67) sur le support de lame (62, 63), le décalage des deux axes médians de rotation (M₁, M₂) l'un de l'autre dans la direction de transport T étant égal à zéro et les deux unités de lame (64, 65 ; 66, 67) étant configurées et adaptées de manière à pouvoir être réglées exclusivement de manière synchrone l'une par rapport à l'autre.

9. Agencement (18) selon une ou plusieurs des revendications 1 à 8, **caractérisé en ce que** le deuxième et le troisième dispositif de découpe (24, 25) sont agencés l'un derrière l'autre dans la direction de transport T et sont agencés chacun sur un mécanisme robotique (68, 69), p. ex. une cinématique delta, les mécanismes robotiques (68, 69) étant également reliés à l'appareil de commande (26).

10. Agencement (18) selon une ou plusieurs des revendications 1 à 9, **caractérisé en ce que** l'unité de transport (19) comprend plusieurs éléments de transport (28, 31), un premier élément de transport (28) étant, dans la zone du premier dispositif de découpe (21), une double bande (29) entraînée en circulation avec une fente (30) s'étendant au centre et parallèlement à la direction de transport T, tandis qu'un deuxième élément de transport (31) est, dans la zone de l'unité de découpe (23), une chaîne à segments (32) de forme triangulaire dans la section transversale, entraînée en circulation.

11. Agencement (18) selon la revendication 10, **caractérisé en ce que** la double bande (29) et la chaîne à segments (32) forment une unité de transport continue (19) le long du chemin de transport dans la direction de transport T, la chaîne à segments (32) s'engageant dans la double bande (29) par le bas à travers la fente (30) pour transférer les filets de poisson (10) depuis la double bande (29) au moins dans la zone de transition (Ü) de la double bande (29) à la chaîne à segments (32).

12. Agencement (18) selon la revendication 10 ou 11, **caractérisé en ce que** la chaîne à segments (32) forme le moyen (22) pour ouvrir les filets de poisson (10).

13. Agencement (18) selon une ou plusieurs des revendications 10 à 12, **caractérisé en ce que** la chaîne à segments (32) présente sur son côté supérieur orienté en direction de l'unité de découpe (23) des saillies (45) de type mandrin pour fixer les filets de poisson (10) sur la chaîne à segments (32).

14. Agencement (18) selon une ou plusieurs des revendications 10 à 13, **caractérisé en ce que** des serre-flans (48, 49) sont associés à la chaîne à segments (32) au moins dans la zone de l'unité de découpe (23), de telle sorte que les filets de poisson (10) ouverts peuvent être fixés des deux côtés de la chaîne à segments (32) entre les serre-flans (48, 49) et la chaîne à segments (32) au moins lors du retrait des bandes partielles situées du côté du ventre et situées du côté du dos.

15. Agencement (18) selon une ou plusieurs des revendications 10 à 14, **caractérisé en ce que** des moyens de fixation (43) sont prévus dans la zone de la double bande (29), de telle sorte que le filet de poisson (10) peut être fixé sur la double bande (29) au moins lors du retrait de la bande partielle centrale médiane.

16. Agencement (18) selon une ou plusieurs des revendications 1 à 15, **caractérisé en ce qu'**une deuxième unité de découpe (70), qui correspond à la première unité de découpe (23), est agencée dans la direction de transport T après la première unité de découpe (23) comprenant le deuxième et le troisième dispositif de découpe (24, 25), la deuxième unité de découpe (70) étant également reliée à l'appareil de commande (26).

17. Agencement (18) selon la revendication 16, **caractérisé en ce que**, dans la direction de transport T, un troisième moyen (71) pour détecter la chair grise est agencé après la première unité de découpe (21) et avant la deuxième unité de découpe (70), le troisième moyen (71) pour détecter la chair grise étant également relié à l'appareil de commande (26).

18. Agencement (18) selon une ou plusieurs des revendications 1 à 17, **caractérisé en ce que** des moyens (72, 73) pour aspirer les bandes partielles retirées sont agencés dans la zone de chaque dispositif de découpe (21, 24, 25).

19. Procédé pour retirer automatiquement d'un filet de poisson (10) une bande (17) constituée de ce que l'on appelle « chair grise », le procédé comprenant les étapes suivantes :
- le transport automatique du filet de poisson (10) à traiter le long d'un chemin de transport d'une zone d'entrée (E) à une zone de sortie (A) dans la direction de transport T au moyen d'une unité de transport (19),
- la détection automatique de la chair grise dans le filet de poisson (10) à traiter au moyen d'un moyen (20) pour détecter la chair grise,
- la découpe automatique d'une bande partielle centrale médiane de la chair grise du filet de poisson (10) au moyen d'un premier dispositif de découpe (21),
- l'ouverture automatique du filet de poisson (10) débarrassé de la bande partielle médiane au moyen d'un moyen (22) pour ouvrir, de telle sorte que les surfaces de découpe (F₁, F₂), formées lors du retrait de la bande partielle centrale médiane, d'une bande partielle de la chair grise située du côté du ventre et se trouvant encore sur le filet de poisson (10) et d'une bande partielle de la chair grise située du côté du dos et se trouvant encore sur le filet de poisson (10) sont orientées vers le haut à l'opposé de l'unité de transport (19),
- la découpe automatique de la bande partielle située du côté du ventre et située du côté du dos du filet de poisson (10) au moyen d'un deuxième et d'un troisième dispositif de découpe (24, 25),
- les dispositifs de découpe (24, 25) étant commandés au moyen d'un appareil de commande (26) sur la base des données et/ou des informations déterminées par le moyen (20) pour détecter la chair grise.

20. Procédé selon la revendication 19, **caractérisé en ce que** la bande de chair grise est découpée automatiquement du filet de poisson (10) en au moins trois étapes, en premier la bande partielle centrale médiane étant découpée du filet de poisson (10), et ensuite tout d'abord la bande partielle située du côté du ventre, puis la bande partielle située du côté du dos ou en premier la bande partielle située du côté du dos, puis la bande partielle située du côté du ventre de la chair grise étant découpées du filet de poisson (10).

21. Procédé selon la revendication 19 ou 20, **caractérisé en ce que** la découpe tout d'abord de la bande partielle située du côté du ventre, puis de la bande partielle située du côté du dos, ou vice versa, est répétée dans une quatrième et cinquième étape par des dispositifs de découpe supplémentaires le long du chemin de transport, une nouvelle détection automatique de la chair grise dans le filet de poisson (10) à traiter étant effectuée avant la quatrième et la cinquième étape au moyen d'un moyen (71) pour détecter la chair grise.

22. Procédé selon une ou plusieurs des revendications 19 à 21, **caractérisé en ce que** chaque filet de poisson (10) est fixé sur l'unité de transport (19) pendant la découpe des bandes partielles.

23. Procédé selon une ou plusieurs des revendications 19 à 22, **caractérisé en ce que** toutes les découpes de toutes les bandes partielles sont réalisées par des lames circulaires (28, 29 ; 54, 55 ; 56, 57) inclinées en forme de V les unes par rapport aux autres.

24. Procédé selon une ou plusieurs des revendications 19 à 23, **caractérisé en ce que** les bandes partielles retirées par la découpe sont aspirées.

25. Procédé selon une ou plusieurs des revendications 19 à 24, **caractérisé en ce qu'**il est réalisé avec un agencement (18) selon une ou plusieurs des revendications 1 à 18.
